(19) Europäisches Patentamt
European Patent Office
Office européen des brevets

(11) EP 4 535 697 A1

(12) **EUROPEAN PATENT APPLICATION**
published in accordance with Art. 153(4) EPC

(43) Date of publication:
**09.04.2025 Bulletin 2025/15**

(21) Application number: **23834627.4**

(22) Date of filing: **20.06.2023**

(51) International Patent Classification (IPC):
***H04L 1/06*** *(2006.01)*

(52) Cooperative Patent Classification (CPC):
**H04L 1/06**

(86) International application number:
**PCT/CN2023/101221**

(87) International publication number:
**WO 2024/007853 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.07.2022 CN 202210779750**

(71) Applicant: **Huawei Technologies Co., Ltd.**
**Shenzhen, Guangdong 518129 (CN)**

(72) Inventors:
- **LI, Ting**
  **Shenzhen, Guangdong 518129 (CN)**
- **WANG, Xiaohan**
  **Shenzhen, Guangdong 518129 (CN)**
- **JIN, Huangping**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) CHANNEL STATE INFORMATION FEEDBACK METHOD, TERMINAL DEVICE AND ACCESS NETWORK DEVICE

(57) This application provides a channel state information feedback method, a terminal device, and an access network device, to accurately feed back channel state information, and improve accuracy of a precoding matrix. The method includes: The terminal device sends first channel state information to the access network device, where the first channel state information includes indication information of a first basis of statistical eigen subspace, and a periodicity for sending the first channel state information by the terminal device is a first periodicity. The terminal device sends second channel state information to the access network device, where the second channel state information includes indication information of a first linear combination coefficient, and a periodicity for sending the second channel state information by the terminal device is a second periodicity. The terminal device updates a second basis to the first basis based on trigger information. The terminal device sends third channel state information to the access network device, where the third channel state information includes indication information of a second linear combination coefficient, and the third channel state information is generated by the terminal device based on the updated second basis.

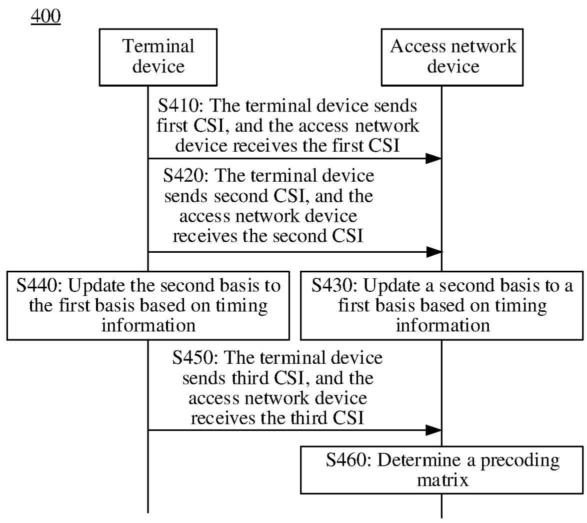


FIG. 5

EP 4 535 697 A1

## Description

This application claims priority to Chinese Patent Application No. 202210779750.8, filed with the China National Intellectual Property Administration on July 4, 2022 and entitled "CHANNEL STATE INFORMATION FEEDBACK METHOD, TERMINAL DEVICE, AND ACCESS NETWORK DEVICE", which is incorporated herein by reference in its entirety.

## TECHNICAL FIELD

This application relates to the communication field, and more specifically, to a channel state information feedback method, a terminal device, and an access network device.

## BACKGROUND

A 5G communication system has higher requirements on aspects such as a system capacity and spectral efficiency. In the 5G communication system, application of a massive multiple-antenna technology plays a critical role in improving the spectral efficiency of the system. When a multiple-input multiple-output (multiple-input multiple-output, MIMO) technology is used, an access network device needs to precode data before sending the data to UE. In a frequency division duplex (frequency division duplex, FDD) system, because a gap between uplink and downlink frequency bands is greater than bandwidth, there is no complete reciprocity between uplink and downlink channels. The access network device requires a terminal device to feed back channel state information (channel state information, CSI) of a downlink channel to the access network device, to determine a precoding matrix. Therefore, how to accurately feed back the CSI is an important factor that affects system performance.

## SUMMARY

This application provides a channel state information feedback method, a terminal device, and an access network device, to accurately feed back CSI information, improve accuracy of a precoding matrix, and improve system performance.

According to a first aspect, a channel state information feedback method is provided, including: A terminal device sends first channel state information CSI to an access network device, where the first CSI includes indication information of a first basis of statistical eigen subspace, and a periodicity for sending the first CSI by the terminal device is a first periodicity. Before the terminal device updates a second basis to the first basis, the terminal device sends second CSI to the access network device, where the second CSI includes indication information of a first linear combination coefficient, a periodicity for sending the second CSI by the terminal device is a second periodicity, the first periodicity is greater than the second periodicity, and the first linear combination coefficient is a combination coefficient corresponding to the second basis. The second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The terminal device updates the second basis to the first basis based on trigger information. After the terminal device updates the second basis to the first basis, the terminal device sends third CSI to the access network device, where the third CSI includes indication information of a second linear combination coefficient, the third CSI is generated by the terminal device based on the updated second basis, and a periodicity for sending the third CSI by the terminal device is the second periodicity.

The terminal device updates a statistical eigen subspace basis based on the trigger information, and updates the second basis to the first basis. Based on the trigger information, it may be ensured that the access network device and the terminal device synchronously update the statistical eigen subspace basis. After the terminal device updates the basis, the terminal device sends, to the access network device, the third CSI generated based on the updated second basis. A basis used by the access network device is the updated second basis. Therefore, the second linear combination coefficient obtained by the access network device based on the received indication information that is of the second linear combination coefficient and that is reported in the second periodicity can match the first basis that is of the statistical eigen subspace and that is used to restore a precoding matrix. This improves accuracy of the precoding matrix and improves system performance.

With reference to the first aspect, in a possible implementation of the first aspect, when the trigger information is timing information, that the terminal device updates the second basis to the first basis based on trigger information includes: When the timing information reaches specified time, the terminal device updates the second basis to the first basis.

The terminal device updates the second basis to the first basis based on the timing information, to ensure that the access network device (the access network device also updates the second basis to the first basis based on the timing information) and the terminal device synchronously update the statistical eigen subspace basis. Therefore, signaling overheads can be further reduced by accurately feeding back CSI information.

With reference to the first aspect, in a possible implementation of the first aspect, the timing information is obtained by the terminal device from the access network device by using configuration information, or the timing information is predefined.

With reference to the first aspect, in a possible implementation of the first aspect, the terminal device receives update indication information sent by the access network device, where the update indication information indicates the terminal device to update the second basis of the statistical eigen subspace to the first basis. That the terminal device updates the second basis to the first basis based on trigger information includes: The terminal device updates the second basis to the first basis based on the update indication information.

After receiving the indication information, the terminal device updates the second basis to the first basis, to ensure that the access network device (the access network device updates the second basis to the first basis after sending the indication information) and the terminal device synchronously update the statistical eigen subspace basis. Therefore, CSI information is accurately fed back.

With reference to the first aspect, in a possible implementation of the first aspect, before that the terminal device updates the second basis to the first basis based on trigger information, the method further includes: The terminal device receives retransmission signaling sent by the access network device, where the retransmission signaling indicates the terminal device to retransmit the first CSI. The terminal device retransmits the first CSI to the access network device based on the retransmission signaling.

When the access network device fails to obtain the indication information of the first basis, the access network device sends the retransmission signaling to the terminal device to indicate the terminal device to retransmit the first CSI, so that the indication information of the first basis is re-obtained. Then, the terminal device updates the second basis of the statistical eigen subspace to the first basis based on the timing information. Therefore, the second linear combination coefficient obtained by the access network device based on the received indication information that is of the second linear combination coefficient and that is reported in the second periodicity can match the first basis that is of the statistical eigen subspace and that is used to restore the precoding matrix. This improves the accuracy of the precoding matrix and improves the system performance.

With reference to the first aspect, in a possible implementation of the first aspect, duration of the timing information is information locally configured on the terminal device, is predefined in a protocol, and is known to both the access network device and the terminal device. Alternatively, the access network device sends duration of the first periodicity, duration of the second periodicity, and duration of the timing information to the terminal device by using the configuration information. Alternatively, duration of the timing information may be determined by the terminal device and then reported to the access network device.

With reference to the first aspect, in a possible implementation of the first aspect, at least one of the update indication information, the configuration information, or the retransmission signaling is included in radio resource control RRC signaling, media access control-control element MAC-CE signaling, or downlink control information DCI.

According to a second aspect, a channel state information feedback method is provided, including: An access network device receives and parses first channel state information CSI sent by a terminal device, where the first CSI includes indication information of a first basis of statistical eigen subspace, and a periodicity for receiving the first CSI by the access network device is a first periodicity. Before the access network device updates a second basis to the first basis, the access network device receives and parses second CSI sent by the terminal device, where the second CSI includes indication information of a first linear combination coefficient, a periodicity for receiving the second CSI by the access network device is a second periodicity, the first periodicity is greater than the second periodicity, and the first linear combination coefficient is a combination coefficient corresponding to the second basis. A statistical eigen subspace basis currently used by the access network device is the second basis of the statistical eigen subspace, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The access network device updates the second basis to the first basis based on timing information. After the access network device updates the second basis to the first basis, the access network device receives and parses third CSI sent by the terminal device, where the third CSI includes indication information of a second linear combination coefficient, the third CSI is generated by the terminal device based on the updated second basis, and a periodicity for sending the third CSI by the terminal device is the second periodicity. The access network device determines a precoding matrix based on the first basis and the second linear combination coefficient.

The access network device updates the statistical eigen subspace basis based on the timing information, and updates the second basis to the first basis. Based on the timing information, it may be ensured that the access network device and the terminal device synchronously update the statistical eigen subspace basis. After the access network device updates the basis, the access network device receives the third CSI, where the third CSI includes the indication information of the second linear combination coefficient, the third CSI is generated by the terminal device based on the updated second basis, and a basis used by the access network device is the updated second basis. Therefore, the second linear combination coefficient obtained by the access network device based on the received indication information that is of the second linear combination coefficient and that is reported in the second periodicity can match the first basis that is of the statistical eigen subspace and that is used to restore the precoding matrix. This improves accuracy of the precoding matrix and improves system performance.

With reference to the second aspect, in a possible implementation of the second aspect, the timing information is determined by the access network device or predefined.

With reference to the second aspect, in a possible implementation of the second aspect, when the timing information is determined by the access network device, the method further includes: The access network device sends configuration information to the terminal device.

With reference to the second aspect, in a possible implementation of the second aspect, before that the access network device updates the second basis to the first basis based on timing information, the method further includes: When the access network device fails to obtain the first basis, the access network device sends retransmission signaling to the terminal device, where the retransmission signaling indicates the terminal device to retransmit the first CSI.

The access network device receives the first CSI retransmitted by the terminal device.

With reference to the second aspect, in a possible implementation of the second aspect, that the access network device fails to obtain the first basis includes: The access network device fails to receive the first CSI; or the access network device fails to parse the first CSI.

With reference to the second aspect, in a possible implementation of the second aspect, duration of the timing information is information locally configured on the terminal device, is predefined in a protocol, and is known to both the access network device and the terminal device. Alternatively, the access network device sends duration of the first periodicity, duration of the second periodicity, and duration of the timing information to the terminal device by using the configuration information. Alternatively, duration of the timing information may be determined by the terminal device and then reported to the access network device.

With reference to the second aspect, in a possible implementation of the second aspect, at least one of the configuration information and the retransmission signaling is included in radio resource control RRC signaling, media access control-control element MAC-CE signaling, or downlink control information DCI.

According to a third aspect, a channel state information feedback method is provided, including: An access network device receives and parses first channel state information CSI sent by a terminal device, where the first CSI includes indication information of a first basis of statistical eigen subspace, and a periodicity for receiving the first CSI by the access network device is a first periodicity. Before the access network device updates a second basis to the first basis, the access network device receives and parses second CSI sent by the terminal device, where the second CSI includes indication information of a first linear combination coefficient, a periodicity for receiving the second CSI by the access network device is a second periodicity, the first periodicity is greater than the second periodicity, and the first linear combination coefficient is a combination coefficient corresponding to the second basis. A statistical eigen subspace basis currently used by the access network device is the second basis, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The access network device updates the second basis to the first basis. The access network device sends update indication information to the terminal device, where the update indication information indicates the terminal device to update the second basis to the first basis. After the access network device updates the second basis to the first basis, the access network device receives and parses third CSI sent by the terminal device, where the third CSI includes indication information of a second linear combination coefficient, the third CSI is generated by the terminal device based on the updated second basis, and a periodicity for sending the third CSI by the terminal device is the second periodicity. The access network device determines a precoding matrix based on the first basis and the second linear combination coefficient.

The access network device determines to update a statistical eigen subspace basis, and the access network device sends indication information to the terminal device to indicate the terminal device to update the statistical eigen subspace basis, so that the access network device and the terminal device can synchronously update the statistical eigen subspace basis. Therefore, the second linear combination coefficient obtained by the access network device based on the received indication information that is of the second linear combination coefficient and that is reported in the second periodicity can match the first basis that is of the statistical eigen subspace and that is used to restore the precoding matrix. This improves accuracy of the precoding matrix and improves system performance.

With reference to the third aspect, in a possible implementation of the third aspect, before that the access network device updates the second basis to the first basis, the method further includes: When the access network device fails to obtain the first basis, the access network device sends retransmission signaling to the terminal device, where the retransmission signaling indicates the terminal device to retransmit the first CSI. The access network device receives the first CSI retransmitted by the terminal device.

With reference to the third aspect, in a possible implementation of the third aspect, that the access network device fails to obtain the first basis includes: The access network device fails to receive the first CSI; or the access network device fails to parse the first CSI.

With reference to the third aspect, in a possible implementation of the third aspect, the access network device sends duration of the first periodicity and duration of the second periodicity to the terminal device by using configuration information. Alternatively, duration of timing information may be determined by the terminal device and then reported to the access network device.

With reference to the third aspect, in a possible implementation of the third aspect, at least one of the update indication information and the retransmission signaling is sent by using radio resource control RRC signaling, media access control-control element MAC-CE signaling, or downlink control information DCI.

According to a fourth aspect, a terminal device is provided, including: a transceiver, configured to send first channel state information CSI to an access network device, where the first CSI includes indication information of a first basis of statistical eigen subspace, and a periodicity for sending the first CSI by the terminal device is a first periodicity, where the transceiver is further configured to: before the terminal device updates a second basis to the first basis, send second CSI to the access network device, where the second CSI includes indication information of a first linear combination coefficient, a periodicity for sending the second CSI by the terminal device is a second periodicity, the first periodicity is greater than the second periodicity, and the first linear combination coefficient is a combination coefficient corresponding to the second basis, where the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain; and a processor, configured to update the second basis to the first basis based on trigger information, where the transceiver is further configured to: after the terminal device updates the second basis to the first basis, send third CSI to the access network device, where the third CSI includes indication information of a second linear combination coefficient, the third CSI is generated by the terminal device based on the updated second basis, and a periodicity for sending the third CSI by the terminal device is the second periodicity.

With reference to the fourth aspect, in a possible implementation of the fourth aspect, the processor is further configured to: when timing information reaches specified time, update the second basis to the first basis.

With reference to the fourth aspect, in a possible implementation of the fourth aspect, the timing information is obtained by the transceiver from the access network device by using configuration information, or the timing information is predefined.

With reference to the fourth aspect, in a possible implementation of the fourth aspect, the transceiver is configured to receive update indication information sent by the access network device, where the update indication information indicates the terminal device to update the second basis of the statistical eigen subspace to the first basis. The processor is specifically configured to update the second basis to the first basis based on the update indication information.

With reference to the fourth aspect, in a possible implementation of the fourth aspect, the transceiver is further configured to: receive retransmission signaling sent by the access network device, where the retransmission signaling indicates the terminal device to retransmit the first CSI; and retransmit the first CSI to the access network device based on the retransmission signaling.

With reference to the fourth aspect, in a possible implementation of the fourth aspect, duration of the timing information is information locally configured on the terminal device, is predefined in a protocol, and is known to both the access network device and the terminal device. Alternatively, the access network device sends duration of the first periodicity, duration of the second periodicity, and duration of the timing information to the terminal device by using the configuration information. Alternatively, duration of the timing information may be determined by the terminal device and then reported to the access network device.

With reference to the fourth aspect, in a possible implementation of the fourth aspect, at least one of the update indication information, the configuration information, or the retransmission signaling is included in radio resource control RRC signaling, media access control-control element MAC-CE signaling, or downlink control information DCI.

According to a fifth aspect, an access network device is provided, including: a transceiver, configured to receive first channel state information CSI sent by a terminal device, where the first CSI includes indication information of a first basis of statistical eigen subspace, and a periodicity for receiving the first CSI by the access network device is a first periodicity; and a processor, configured to parse the first CSI. The transceiver is configured to: before the access network device updates a second basis to the first basis, receive second CSI sent by the terminal device, where the second CSI includes indication information of a first linear combination coefficient, a periodicity for receiving the second CSI by the access network device is a second periodicity, the first periodicity is greater than the second periodicity, and the first linear combination coefficient is a combination coefficient corresponding to the first basis. A statistical eigen subspace basis currently used by the processor is the second basis of the statistical eigen subspace, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The processor is configured to parse the second CSI. The processor is configured to update the second basis to the first basis based on timing information. After the access network device updates the second basis to the first basis, the transceiver receives third CSI sent by the terminal device, where the third CSI includes indication information of a second linear combination coefficient, the third CSI is generated by the terminal device based on the updated second basis, and a periodicity for sending the third CSI by the terminal device is the second periodicity. The processor is configured to parse the third CSI. The processor is configured to determine a precoding matrix based on the first basis and the second linear combination coefficient.

With reference to the fifth aspect, in a possible implementation of the fifth aspect, the timing information is determined by the access network device or predefined.

With reference to the fifth aspect, in a possible implementation of the fifth aspect, when the timing information is determined by the access network device, the transceiver is further configured to send configuration information to the terminal device.

With reference to the fifth aspect, in a possible implementation of the fifth aspect, the transceiver is further configured to: when the first basis is failed to be obtained, send retransmission signaling to the terminal device, where the retransmission signaling indicates the terminal device to retransmit the first CSI; and receive the first CSI retransmitted by the terminal device.

With reference to the fifth aspect, in a possible implementation of the fifth aspect, that the access network device fails to obtain the first basis includes: The transceiver fails to receive the first CSI; or the processor fails to parse the first CSI.

With reference to the fifth aspect, in a possible implementation of the fifth aspect, duration of the timing information is information locally configured on the terminal device, is predefined in a protocol, and is known to both the access network device and the terminal device. Alternatively, the access network device sends duration of the first periodicity, duration of the second periodicity, and duration of the timing information to the terminal device by using the configuration information. Alternatively, duration of the timing information may be determined by the terminal device and then reported to the access network device.

With reference to the fifth aspect, in a possible implementation of the fifth aspect, at least one of the configuration information and the retransmission signaling is included in radio resource control RRC signaling, media access control-control element MAC-CE signaling, or downlink control information DCI.

According to a sixth aspect, an access network device is provided, including: a transceiver, configured to receive first channel state information CSI sent by a terminal device, where the first CSI includes indication information of a first basis of statistical eigen subspace, and a periodicity for receiving the first CSI by the access network device is a first periodicity; and a processor, configured to parse the first CSI. The transceiver is configured to: before the access network device updates a second basis to the first basis, receive second CSI sent by the terminal device, where the second CSI includes indication information of a first linear combination coefficient, a periodicity for receiving the second CSI by the access network device is a second periodicity, the first periodicity is greater than the second periodicity, and the first linear combination coefficient is a combination coefficient corresponding to the second basis. A statistical eigen subspace basis currently used by the processor is the second basis of the statistical eigen subspace, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The processor is configured to parse the second CSI. The access network device updates the second basis to the first basis. The transceiver sends update indication information to the terminal device, where the update indication information indicates the terminal device to update the second basis to the first basis. After the access network device updates the second basis to the first basis, the transceiver receives third CSI sent by the terminal device, where the third CSI includes indication information of a second linear combination coefficient, the third CSI is generated by the terminal device based on the updated second basis, and a periodicity for sending the third CSI by the terminal device is the second periodicity. The processor is configured to parse the third CSI. The processor is configured to determine a precoding matrix based on the first basis and the second linear combination coefficient.

With reference to the sixth aspect, in a possible implementation of the sixth aspect, the transceiver is further configured to: when the first basis is failed to be obtained, send retransmission signaling to the terminal device, where the retransmission signaling indicates the terminal device to retransmit the first CSI; and receive the first CSI retransmitted by the terminal device.

With reference to the sixth aspect, in a possible implementation of the sixth aspect, that the first basis is failed to be obtained includes: The transceiver fails to receive the first CSI; or the processor fails to parse the first CSI.

With reference to the sixth aspect, in a possible implementation of the sixth aspect, the access network device sends duration of the first periodicity and duration of the second periodicity to the terminal device by using configuration information.

With reference to the sixth aspect, in a possible implementation of the sixth aspect, at least one of the update indication information and the retransmission signaling is sent by using radio resource control RRC signaling, media access control-control element MAC-CE signaling, or downlink control information DCI.

According to a seventh aspect, a computer program product is provided. The computer program product includes instructions. When the instructions are run on a computer, the computer is enabled to perform the method in any one of the first aspect or the possible implementations of the first aspect, perform the method in any one of the second aspect or the possible implementations of the second aspect, or perform the method in any one of the third aspect or the possible implementations of the third aspect.

According to an eighth aspect, a computer-readable storage medium is provided. The computer-readable storage medium stores a computer program. When the computer program is executed, the computer program is used to perform the method in any one of the first aspect or the possible implementations of the first aspect, perform the method in any one of the second aspect or the possible implementations of the second aspect, or perform the method in any one of the third aspect or the possible implementations of the third aspect.

According to a ninth aspect, a chip system is provided. The chip system includes a processor, and is used by a communication apparatus to implement a function in the foregoing aspects, such as generating, receiving, sending, or processing data and/or information related to the foregoing methods. In a possible design, the chip system further includes a memory. The memory is configured to store program instructions and data that are necessary for the communication apparatus. The chip system may include a chip, or may include a chip and another discrete component.

According to a tenth aspect, a communication system is provided. The communication system includes a terminal device that has a function of implementing the method and the possible designs in the first aspect and an access network device that has a function of implementing the method and the possible designs in the second aspect. Alternatively, the communication system includes a terminal device that has a function of implementing the method and the possible designs in the first aspect and an access network device that has a function of implementing the method and the possible designs in the third aspect.

## BRIEF DESCRIPTION OF DRAWINGS

FIG. 1 is a diagram of an architecture of a communication system according to this application;
FIG. 2 is a diagram of an architecture of another communication system according to this application;
FIG. 3 is a schematic flowchart of a method for feeding back CSI of a downlink channel by user equipment to an access network device;
FIG. 4 is a schematic flowchart of air interface interaction of CSI when a statistical eigen subspace codebook is used;
FIG. 5 is a schematic flowchart of a channel state information feedback method according to this application;
FIG. 6 is a schematic flowchart of air interface interaction between an access network device and a terminal device according to this application;
FIG. 7 is a schematic flowchart of air interface interaction between an access network device and a terminal device according to this application;
FIG. 8 is a schematic flowchart of a precoding matrix determining method according to this application;
FIG. 9 is a schematic flowchart of air interface interaction between an access network device and a terminal device according to this application;
FIG. 10 is a schematic flowchart of air interface interaction between an access network device and a terminal device according to this application;
FIG. 11 is a diagram of module interaction between a terminal device and an access network device according to this application;
FIG. 12 is a block diagram of a communication apparatus according to an embodiment of this application;
FIG. 13 is a block diagram of a communication apparatus according to an embodiment of this application;
FIG. 14 is a diagram of a structure of a terminal device according to this application; and
FIG. 15 is a diagram of a structure of an access network device according to this application.

## DESCRIPTION OF EMBODIMENTS

The following describes technical solutions in this application with reference to accompanying drawings.

The technical solutions in embodiments of this application may be applied to various communication systems, for example, a global system for mobile communications (Global System For Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunications System, UMTS), a worldwide interoperability for microwave access (Worldwide Interoperability for Microwave Access, WiMAX) communication system, and a 5th generation (5th generation, 5G) system or a new radio (New Radio, NR) system. In addition, the technical solutions are alternatively applicable to a subsequent evolved system, for example, a 6th generation 6G communication system or an even more advanced 7th generation 7G communication system.

An access network device in embodiments of this application may be a device that communicates with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between the wireless terminal and a rest portion of the access network, where the rest portion of the access network may include an internet protocol (IP) network. The network device may further coordinate attribute management of the air interface. For example, the access network device may be a base station (Base Transceiver Station, BTS) in the GSM or the CDMA, may be a NodeB (NodeB, NB) in the WCDMA, may be an evolved NodeB (evolved NodeB, eNB or eNodeB) in the LTE system, or may be a radio controller in a cloud radio access network (cloud radio access network, CRAN) scenario. Alternatively, the access device may be a relay station, an access point, a vehicle-mounted device, a wearable device, an access device in a 5G network, a network device in a future evolved PLMN network, or the like, may be an access point (access point, AP) in a WLAN, or may be a gNB in the new radio (new radio, NR) system. This is not limited in embodiments of this application. It should be noted that, in the 5G system, there may be one or more transmission reception points (Transmission Reception Points, TRPs) on one base station. All TRPs belong to a same cell. A measurement reporting method described in embodiments of this application may be used for each TRP and the terminal. In another scenario, the network device may be further divided into a control unit (Control Unit, CU) and a data unit (Data Unit, DU). There may be a plurality of DUs under one CU. The measurement reporting method described in embodiments of this application may be used for each DU and the terminal. A difference between a CU-DU separation scenario and a multi-TRP scenario lies in that a TRP only serves as a radio frequency unit or an antenna device, but a DU may implement a protocol stack function, for example, the DU may implement a physical layer function.

In addition, in embodiments of this application, the access network device is a device in an access network (radio access network, RAN), in other words, a RAN node that connects the terminal device to a wireless network. For example, by way of example and not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

The access network device provides a service for a cell. The terminal device communicates with the access network device by using a transmission resource (for example, a frequency domain resource, in other words, a spectrum resource) used for the cell. The cell may be a cell corresponding to the access network device (for example, a base station), and the cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing a high-rate data transmission service.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in the 5G network, a terminal device in a future evolved public land mobile network (public land mobile network, PLMN), and the like. This is not limited in embodiments of this application.

By way of example and not limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of the user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that focus on only one type of application function and need to be work with other devices such as smartphones, such as various smart bands or smart jewelry for monitoring physical signs.

In addition, in embodiments of this application, the terminal device may alternatively be a terminal device in an internet of things (internet of things, IoT) system. The IoT is an important part of future development of information technologies. A main technical feature of the IoT is to connect things to a network by using a communication technology to implement an intelligent network for interconnection between a person and a machine or between things.

If various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as the terminal device.

FIG. 1 is a diagram of a communication system 100 according to this application. In FIG. 1, an access network device 110, a terminal device 120, a terminal device 130, a terminal device 140, a terminal device 150, a terminal device 160, and a terminal device 170 are included. For example, the access network device 110 works in an evolved universal mobile telecommunications system terrestrial radio access (evolved UMTS terrestrial radio access, E-UTRA) system, works in an NR system, or works in a next generation communication system or another communication system. The access network device 110 may communicate with the terminal device 120 to the terminal device 170 through Uu interfaces, the access network device 110 and the terminal device 120 to the terminal device 170 form a communication system. In the communication system, the terminal device 120 to the terminal device 170 may send uplink data to the access network device 110, the access network device 110 needs to receive the uplink data sent by the terminal device 120 to the terminal device 170, and the access network device 110 may send downlink data to the terminal device 120 to the terminal device 170. In addition, the terminal device 150 to the terminal device 170 may also form a communication system. In the communication system, the access network device may send downlink information to the terminal device 150, and the terminal device 150 may also send downlink information to terminal devices 160 and 170.

In this application, one access network device may serve a plurality of terminal devices. In FIG. 1, only some of the terminal devices are used as examples.

In FIG. 1, the access network device is, for example, a base station. The access network device corresponds to different devices in different systems. For example, the access network device may correspond to an eNB in a 4G system, and corresponds to an access network device in 5G in a 5G system, for example, a gNB. Technical solutions provided in embodiments of this application may also be applied to a future mobile communication system. Therefore, the access network device in FIG. 1 may alternatively correspond to an access network device in the future mobile communication system. In FIG. 1, an example in which the access network device is the base station is used. Actually, with reference to the foregoing descriptions, the access network device may alternatively be a device such as an RSU.

FIG. 2 is a diagram of an architecture of another communication system 200 according to this application. As shown in FIG. 2, a plurality of access network devices (an access network device 210, an access network device 220, and an access network device 230) and a plurality of terminal devices (a terminal device 240, a terminal device 250, and a terminal device 260) form a communication system, and the plurality of access network devices simultaneously serve one terminal device. For example, the access network device 210, the access network device 220, and the access network device 230 simultaneously serve the terminal device 250.

In FIG. 1 or FIG. 2, the access network device is, for example, a base station. The access network device corresponds to different devices in different systems. For example, the access network device may correspond to an eNB in a 4G system, and corresponds to an access network device in 5G in a 5G system, for example, a gNB. Technical solutions provided in this application may also be applied to a future mobile communication system. Therefore, the access network device in FIG. 1 may alternatively correspond to an access network device in the future mobile communication system. In FIG. 1 or FIG. 2, an example in which the access network device is the base station is used. Actually, with reference to the foregoing descriptions, the access network device may alternatively be a device such as an RSU.

It should be understood that the communication system shown in FIG. 1 or FIG. 2 may further include more network nodes, for example, another terminal device or access network device. The access network devices or the terminal devices included in the communication system shown in FIG. 1 or FIG. 2 may be the foregoing access network devices or terminal devices in various forms. Details are not described one by one in the figure in embodiments of this application.

A 5G communication system has higher requirements on aspects such as a system capacity and spectral efficiency. In the 5G communication system, application of a massive multiple-antenna (Massive MIMO) technology plays a critical role in improving the spectral efficiency of the system. When a MIMO technology is used, the access network device needs to precode data before sending the data to UE. How to perform precoding needs to depend on channel state information (channel state information, CSI) fed back by the user equipment to the access network device. Therefore, accurate CSI feedback information is an important factor that affects system performance.

In a time division duplex (time division duplex, TDD) system, because an uplink channel and a downlink channel use a same frequency band, reciprocity exists. The access network device may obtain CSI of the downlink channel through the uplink channel by using the channel reciprocity, to further perform the precoding.

However, in a frequency division duplex (frequency division duplex, FDD) system, because a gap between uplink and downlink frequency bands is greater than bandwidth, there is no complete reciprocity between uplink and downlink channels. In a conventional FDD system, the user equipment needs to feed back the CSI of the downlink channel to the access network device. A basic procedure is shown in FIG. 3. FIG. 3 is a schematic flowchart of a method 300 for feeding back CSI of a downlink channel by user equipment to an access network device. The method 300 includes S310 to S340.

S310: The access network device sends channel measurement configuration information to a terminal device, where the channel measurement configuration information is used to configure time and a behavior of performing channel measurement by the terminal device.

S320: The access network device sends a reference signal to the terminal device for the channel measurement.

S330: The terminal device performs the measurement based on the reference signal sent by the access network device, performs calculation based on a measurement result to obtain a final CSI feedback amount, and the terminal device feeds back CSI to the access network device.

S340: The access network device sends data based on the CSI fed back by the terminal device.

The CSI may include parameters such as a precoding matrix indicator (precoding matrix indicator, PMI), a channel rank indicator (rank indicator, RI), and a channel state indicator (channel quality indicator, CQI). For example, the access network device may determine, based on a PMI fed back by the terminal device, the precoding matrix for performing transmission of data to the terminal device; the access network device may determine, based on an RI fed back by the terminal device, a quantity of streams for performing transmission of the data to the terminal device; and the access network device may determine, based on a CQI fed back by the terminal device, a modulation order and a channel coding rate for performing transmission of the data to the terminal device.

The PMI is determined and reported based on one set of codebooks, and indicates the precoding matrix. A network device restores the precoding matrix based on the PMI and the codebooks. The precoding matrix may be a precoding matrix determined by the network device based on a channel matrix of each frequency domain unit. For example, the precoding matrix may be obtained by performing singular value decomposition (singular value decomposition, SVD) on a channel matrix or a covariance matrix of a channel matrix, or may be obtained by performing eigenvalue decomposition (eigenvalue decomposition, EVD) on a covariance matrix of a channel matrix. The precoding matrix includes channel information of a transmit end of the network device. Design of an FDD CSI codebook is a basic and important problem in a 5G communication system.

In a 3rd generation partnership project (3rd generation partnership project, 3GPP) R15 Type II (Type II) codebook, a space domain (angle domain) compression idea is used, and sparsity of a channel in angle domain is used. To be specific, a multipath signal has strong energy in several angle directions and weak energy in other directions. In this case, a space domain discrete fourier transform (discrete fourier transform, DFT) basis vector indicates an angle direction with strong energy, and the precoding matrix is represented by a linear combination of several space domain DFT basis vectors. In a 3GPP R16 Type II codebook, a dual-domain compression idea is proposed. Frequency domain (delay domain) compression is added based on the R15 codebook by using frequency domain correlations between amplitudes and phase coefficients of different subbands. Channel information is separately compressed and fed back in space domain and frequency domain. The precoding matrix is approximately represented by using a weighted sum of a space-frequency component matrix. A space-frequency component matrix is constructed by using one or more space domain basis vectors compressed by space domain and one or more frequency domain basis vectors compressed by frequency domain.

In comparison with the R15 codebook, in the R16 codebook, sparsity of a channel in delay domain is further used. To be specific, energy of a multipath signal is strong on several delay components, energy of the multipath signal is weak on other delay components, and corresponding frequency domain compression is completed. However, the foregoing dual-domain compression codebook only respectively uses the sparsity of the channel in angle domain (space domain) and the sparsity of the channel in delay domain (frequency domain). The one or more selected space domain basis vectors, the one or more selected frequency domain basis vectors, and a weighting coefficient corresponding to the space-frequency component matrix constructed based on the one or more space domain basis vectors and the one or more frequency domain basis vectors need to be reported, and overheads are still high. In addition, it is specified in the protocol that both the space domain basis vector and the frequency domain basis vector are DFT vectors, and resolutions in angle domain and delay domain are limited. Therefore, separate reporting of the space domain basis vector and the frequency domain basis vector limits sparsity of a weighting coefficient matrix. This leads to low system performance.

To fully use the sparsity of the channel in space domain and the sparsity of the channel in frequency domain, and further reduce PMI feedback overheads, feedback may be performed in a manner of statistical eigen subspace codebook. The codebook indicates a downlink channel or a precoding matrix by using a statistical eigen subspace basis in a long periodicity and a corresponding linear combination coefficient.

The codebook may be similar to the R16 Type II codebook, and a bilinear combination of a set of statistical eigen subspace bases in space domain and a set of statistical eigen subspace bases in frequency domain represents the downlink channel or the precoding matrix. Further, in the codebook, space domain and frequency domain may alternatively be joint, and a linear combination of a set of statistical eigen subspace bases that are joint in space domain and frequency domain represents the downlink channel or the precoding matrix. The statistical eigen subspace basis is an eigenvector or an eigenvector group that may indicate a statistical change rule of a channel in space domain, frequency domain, or joint space-frequency domain, and is usually obtained by performing eigenvalue decomposition on a statistical covariance matrix of the channel. Joint space-frequency domain is a joint domain of space domain and frequency domain. Generally, a signal is propagated through a plurality of paths, leaves a transmit end at different angles, and arrives at a receive end at different angles after different delays. Space domain mainly describes an angle direction feature of a channel, and frequency domain mainly describes a delay distribution feature of a channel. Both are considered from a single dimension. For joint space-frequency domain, a combination of space domain and frequency domain is considered, angle direction and delay distribution features of a multipath are mainly described, and an angle direction and a delay distribution are in one-to-one correspondence. A statistical eigen subspace basis indicating a statistical change rule of a channel in space domain is referred to as a space domain basis for short, a statistical eigen subspace basis indicating a statistical change rule of a channel in frequency domain is referred to as a frequency domain basis for short, and a statistical eigen subspace basis indicating a statistical change rule of a channel in joint space-frequency domain is referred to as a space-frequency joint basis for short.

Because the eigen subspace basis describes a statistical feature of a channel in a domain (for example, space domain, frequency domain, or joint space-frequency domain) in which the channel is located, and changes slowly, for such a type of codebook, the terminal device may feed back the statistical eigen subspace basis in a long periodicity (namely, a first periodicity). Because a linear combination coefficient describes a variable that changes fast, for example, a strength or a phase of a path on a channel, the terminal device may feed back, in a short periodicity (namely, a second periodicity), the linear combination coefficient corresponding to the basis. It should be understood that the long periodicity and the short periodicity are relative concepts. Duration of the first periodicity is greater than duration of the second periodicity. For example, the duration of the first periodicity is a plurality of integer multiples of the duration of the second periodicity. The access network device restores the eigen subspace basis based on a CSI report amount reported by the terminal device in the first periodicity, and restores a precoding matrix of the terminal device in each second periodicity based on a linear combination coefficient reported by the terminal device in the second periodicity. For such a CSI report codebook with the long periodicity and the short periodicity, a basis in the long periodicity and a linear combination coefficient in the short periodicity that are used by the access network device during restoration need to match. How to align ideas of the terminal device and the access network device about whether to update an eigen subspace basis in the long periodicity is extremely important. If a mismatch between the basis in the long periodicity and the linear combination coefficient in the short periodicity occurs when the access network device restores the precoding matrix, the precoding matrix is inaccurate, and a performance loss occurs.

FIG. 4 is a schematic flowchart of air interface interaction of CSI when a statistical eigen subspace codebook is used. A terminal device feeds back a first basis B of statistical eigen subspace based on a CSI report amount in a long periodicity (namely, a first periodicity), and feeds back, based on a CSI report amount in a short periodicity (namely, a second periodicity), a linear combination coefficient $C_2$ corresponding to the first basis B. An access network device sends a channel state information-reference signal (channel state information-reference signal, CSI-RS) to the terminal device in the second periodicity. The terminal device receives the CSI-RS in each second periodicity, determines the first basis B of the statistical eigen subspace based on CSI-RS measurement results in a current short periodicity and a plurality of historical short periodicities, and feeds back the first basis B to the access network device in the first periodicity. In addition, the terminal device determines the linear combination coefficient $C_2$ based on a CSI-RS measurement result in a short periodicity and the first basis B of the statistical eigen subspace, and feeds back the linear combination coefficient $C_2$ to the access network device in the second periodicity. FIG. 4 shows an air interface interaction process in two first periodicities. In a start phase of a 1st first periodicity, UE receives a CSI-RS sent by a RAN device, and the UE determines a first basis B of the statistical eigen subspace based on a current CSI-RS measurement result and a plurality of historical CSI-RS measurement results, and feeds back the first basis B (refer to a first B in FIG. 4) to the RAN device. In the 1st first periodicity, the UE determines linear combination coefficients $C_2$ based on CSI-RS measurement results in a plurality of second periodicities and the first basis B (refer to the first B in FIG. 4) of the statistical eigen subspace, and feeds back the linear combination coefficients $C_2$ (refer to a first $C_2$ and a second $C_2$ in FIG. 4) to the RAN device in the second periodicity. The RAN device separately determines, based on the first B and the linear combination coefficients $C_2$ (for example, the first $C_2$ and the second $C_2$) received in the plurality of second periodicities within the 1st first periodicity, precoding matrices corresponding to the plurality of second periodicities (for example, a precoding matrix determined based on the first B and the first $C_2$ and a precoding matrix determined based on the first B and the second $C_2$). In a start phase of a 2nd first periodicity, the UE receives the CSI-RS sent by the RAN device, and the UE determines a first basis B of the statistical eigen subspace based on a current CSI-RS measurement result and a plurality of historical CSI-RS measurement results, and feeds back the first basis B (refer to a second B in FIG. 4) to the RAN device. In the 2nd first periodicity, the UE determines linear combination coefficients $C_2$ based on CSI-RS measurement results in a plurality of second periodicities and the first basis B (refer to the second B in FIG. 4) of the statistical eigen subspace, and feeds back the linear combination coefficients $C_2$ (refer to a third $C_2$ and a fourth $C_2$ in FIG. 4) to the RAN device in the second periodicity. The RAN device separately determines, based on the second B and the linear combination coefficients $C_2$ (for example, the third $C_2$ and the fourth $C_2$) received in the plurality of second periodicities within the 2nd first periodicity, precoding matrices corresponding to the plurality of second periodicities (for example, a precoding matrix determined based on the second B and the third $C_2$ and a precoding matrix determined based on the second B and the fourth $C_2$).

It should be understood that, in this embodiment of this application, the CSI-RS is only used as an example for description, but is not limited to the CSI-RS. The access network device may further measure another reference signal, for example, a synchronization signal block (synchronization signal block, SSB), a demodulation reference signal (demodulation reference signal, DMRS), and a cell reference signal (cell reference signal, CRS), by configuring the terminal device. Therefore, the terminal device feeds back, based on the CSI report amount in the long periodicity (namely, the first periodicity), the first basis B that is of the statistical eigen subspace and that is obtained through measurement, and feeds back, based on the CSI report amount in the short periodicity (namely, the second periodicity), the linear combination coefficient $C_2$ corresponding to the first basis B.

It should be noted that, due to a channel change, the first basis B fed back by the UE in the 1st first periodicity may be different from the first basis B fed back in the 2nd first periodicity. Similarly, the linear combination coefficients $C_2$ fed back by the UE in each second periodicity may also be different.

It may be learned that a periodicity for sending the CSI-RS by the access network device to the terminal device is the second periodicity, a periodicity for feeding back the first basis B of the statistical eigen subspace by the terminal device to the access network device is the first periodicity, the first basis B that is of the statistical eigen subspace and that is fed back by the terminal device to the access network device is a result of a plurality of accumulated times of measurement, and a periodicity for feeding back the linear combination coefficient $C_2$ by the terminal device to the access network device is the second periodicity. For example, the periodicity for sending the CSI-RS by the access network device to the terminal device is 5 ms, the periodicity for feeding back the first basis B of the statistical eigen subspace by the terminal device to the access network device is 200 ms, and the periodicity for feeding back the linear combination coefficient $C_2$ by the terminal device to the access network device is 5 ms.

The terminal device calculates the first basis B of the statistical eigen subspace based on a channel measurement result in the long periodicity, and reports the first basis B. In addition, before a new statistical eigen subspace basis is calculated in the long periodicity next time, the terminal device calculates a linear combination coefficient $C_2$ in the short periodicity based on a current first basis B of the statistical eigen subspace and the channel measurement result, and reports the linear combination coefficient $C_2$ in the short periodicity. For the access network device, after receiving a current CSI report amount in the long periodicity, the access network device updates, based on the report amount, a statistical eigen subspace basis stored in the access network device to the first basis B. Then, before receiving a report amount in the long periodicity next time, the access network device restores the precoding matrix based on both a current first basis B of the statistical eigen subspace and a linear combination coefficient $C_2$ that is in the short periodicity and that is determined based on each CSI report amount in the short periodicity.

Therefore, it may be learned that calculation of the linear combination coefficient in the short periodicity by the terminal device is related to the statistical eigen subspace basis, and whether the statistical eigen subspace basis in the long periodicity and the linear combination coefficient in the short periodicity that are used by the access network device to restore the precoding matrix are matched greatly affects accuracy of the precoding matrix.

An update and alignment manner of the statistical eigen subspace basis of the access network device and the terminal device in the long periodicity mainly has the following two problems:

(1) After the terminal device reports a current first basis B of the statistical eigen subspace in the long periodicity, before a new statistical eigen subspace basis is calculated in the long periodicity next time, the terminal device calculates and reports a linear combination coefficient in the short periodicity based on the current first basis B of the eigen subspace. However, in an actual system, it takes a period of time from sending the report amount in the long periodicity by the terminal device to receiving and successfully restoring the first basis B of the statistical eigen subspace in the long periodicity by the access network device. In this period of time, restoring of the precoding matrix by the access network device by using a received linear combination coefficient $C_2$ in the short periodicity is based on an eigen subspace basis updated in a previous long periodicity. Therefore, a problem that the linear combination coefficient in the short periodicity does not match the statistical eigen subspace basis exists. This results in a performance loss.

(2) A loss or a decoding error may occur when the access network device receives both the CSI report amount in the long periodicity and the CSI report amount in the short periodicity. If the report amount in the short periodicity is incorrectly decoded or lost, only a current restoration result of the precoding matrix is affected. However, if the access network device fails to correctly decode the report amount in the long periodicity, the access network device restores the precoding matrix in a subsequent long periodicity by using a statistical eigen subspace basis in a previous periodicity. In this case, a linear combination coefficient reported by the terminal device in the short periodicity is obtained through calculation based on a current first basis B of the statistical eigen subspace, so that when the access network device restores the precoding matrix in an entire current long periodicity, a problem that the linear combination coefficient in the short periodicity does not match the statistical eigen subspace basis exists. In this case, a performance loss in the entire long periodicity is caused.

In conclusion, in the foregoing two cases, there is a possibility of a performance loss because the linear combination coefficient in the short periodicity does not match the eigen subspace basis in the long periodicity.

Therefore, this application provides a channel information feedback method, to resolve a problem of a performance loss caused by an inaccurate precoding matrix due to a mismatch between a linear combination coefficient in a short periodicity and a space-frequency joint basis in a long periodicity.

The following describes in detail a channel information feedback method according to this application with reference to FIG. 5. FIG. 5 is a schematic flowchart of a channel state information feedback method 400 according to this application. The method 400 may be applied to the foregoing application scenario. It is clear that the method 400 may alternatively be applied to another communication scenario. This is not limited in this application.

It should be further understood that, in this embodiment of this application, the method is described by using an example in which the method is performed by an access network device and a terminal device. By way of example and not limitation, the method may alternatively be performed by chips, chip systems, processors, or the like used in the terminal device and the access network device.

As shown in FIG. 5, the method 400 shown in FIG. 5 may include S410 to S460. The following describes steps in the method 400 in detail with reference to FIG. 5.

S410: The terminal device sends first CSI to the access network device, and correspondingly, the access network device receives the first CSI from the terminal device. The first CSI includes indication information of a first basis of statistical eigen subspace, a periodicity for sending the first CSI by the terminal device is a first periodicity, and the first basis indicates a change rule of a downlink channel in space domain and/or frequency domain, or the first basis indicates a change rule of a downlink channel in joint space-frequency domain.

It should be understood that the indication information of the first basis directly or indirectly indicates the first basis, or may indicate a part or all of the first basis. The first basis may be determined based on the indication information of the first basis. For example, a mapping relationship between the indication information and the first basis may be pre-established, and the mapping relationship between the indication information and the first basis is stored in the access network device and the terminal device. The terminal device sends the indication information of the first basis to the access network device. After receiving the indication information of the first basis, the access network device determines the first basis based on the mapping relationship between the indication information and the first basis. In this way, signaling overheads can be reduced.

The terminal device periodically sends the first CSI to the access network device, and the sending periodicity is the first periodicity. To be specific, the terminal device sends the first CSI to the access network device at a start moment or an end moment of each first periodicity.

It should be understood that the first basis may indicate the change rule of the downlink channel in space domain and/or frequency domain by using a vector or a vector group, or the first basis may indicate the change rule of the downlink channel in joint space-frequency domain by using a vector or a vector group.

S420: The terminal device sends second CSI to the access network device, and correspondingly, the access network device receives the second CSI from the terminal device. The second CSI includes indication information of a first linear combination coefficient. A periodicity for sending the second CSI by the terminal device is a second periodicity, and the first linear combination coefficient is a combination coefficient corresponding to a second basis.

It should be understood that the indication information of the first linear combination coefficient directly or indirectly indicates the first linear combination coefficient, or may indicate a part or all of the first linear combination coefficient. The first linear combination coefficient may be determined based on the indication information of the first linear combination coefficient. For example, a mapping relationship between the indication information and the first linear combination coefficient may be pre-established, and the mapping relationship between the indication information and the first linear combination coefficient is stored in the access network device and the terminal device. The terminal device sends the indication information of the first linear combination coefficient to the access network device. After receiving the indication information of the first linear combination coefficient, the access network device determines the first linear combination coefficient based on the mapping relationship between the indication information and the first linear combination coefficient. In this way, signaling overheads can be reduced.

The first linear combination coefficient matches the second basis of the statistical eigen subspace. It should be understood that a statistical eigen subspace basis used when the terminal device sends the second CSI is the second basis, the second basis is reported to the access network device in a first periodicity before a first periodicity at which the terminal device sends the second CSI, and the first basis is reported to the access network device in the first periodicity at which the terminal device sends the second CSI, that is, the second basis is a previous first basis.

The terminal device sends the second CSI to the access network device in the second periodicity. To be specific, the terminal device sends the second CSI to the access network device at a start moment or an end moment of each second periodicity. It should be noted that duration of the first periodicity and duration of the second periodicity may be determined by the access network device, and the duration of the first periodicity and the duration of the second periodicity are sent to the terminal device by using configuration information.

In a possible implementation, the access network device sends a CSI-RS to the terminal device in the second periodicity, the terminal device sends the first CSI to the access network device in the first periodicity, and the terminal device sends the second CSI to the access network device in the second periodicity. In another possible implementation, the access network device sends, to the terminal device in the first periodicity, first trigger information for reporting the first CSI. After receiving the first trigger information, the terminal device sends the first CSI to the access network device. The access network device sends, to the terminal device in the second periodicity, second trigger information for reporting the second channel state information. After receiving the second trigger information, the terminal device sends the second CSI to the access network device.

It should be understood that the first CSI and the second CSI may be simultaneously reported, or may be separately reported. In other words, the indication information of the first basis and the indication information of the first linear combination coefficient may be reported in one piece of CSI, or may be reported in different pieces of CSI.

In this case, a statistical eigen subspace basis used by the access network device is also the second basis, and the second basis is obtained by the access network device based on previous first CSI. In this case, the access network device determines a precoding matrix based on the second basis and the first linear combination coefficient.

It should be understood that, in S420, a basis used when the access network device determines the precoding matrix is the second basis, and the terminal device reports the second CSI based on the second basis.

S430: The access network device updates the second basis of the statistical eigen subspace to the first basis based on timing information.

S440: The terminal device updates the second basis of the statistical eigen subspace to the first basis based on timing information.

In a possible implementation, the timing information may be implemented by a timer. For example, specified duration is 20 ms. Duration of the timing information configured on the access network device may be the same as or different from duration of the timing information configured on the terminal device. For example, when information propagation time between the terminal device and the access network device and time for parsing the first CSI on the access network device are considered, the duration of the timing information on the access network device may be greater than the duration of the timing information on the terminal device. For another example, when information propagation time between the terminal device and the access network device and time for parsing the first CSI on the access network device are not considered, the duration of the timing information on the access network device may be equal to the duration of the timing information on the terminal device.

An objective of using the timing information is to enable the terminal device and the access network device to jointly update the second basis of the statistical eigen subspace to the first basis. There may be a plurality of implementations of configuring the timing information for the terminal device and the access network device.

Optionally, the timing information is timing information preconfigured on the access network device and the terminal device. For example, as specified in a communication protocol, the timing information is known to both the access network device and the terminal device.

Optionally, the timing information is determined by the access network device, and is sent to the terminal device by using the configuration information.

Optionally, the timing information is determined by the terminal device, and is reported to the access network device. It should be understood that, before the terminal device and the access network device synchronously update the second basis to the first basis, the terminal device periodically sends the second CSI to the access network device. Correspondingly, the access network device periodically receives the second CSI sent by the terminal device.

S450: The terminal device sends third CSI to the access network device, and correspondingly, the access network device receives the third CSI from the terminal device.

The third CSI includes indication information of a second linear combination coefficient, and the third CSI is generated by the terminal device based on the updated second basis (namely, the first basis), that is, the terminal device generates the third CSI based on a first basis indicated by first CSI closest to a current moment. A periodicity for sending the third CSI by the terminal device is the second periodicity.

After both the terminal device and the access network device update the second basis to the first basis, the terminal device periodically sends the third CSI to the access network device. Correspondingly, the access network device periodically receives the third CSI from the terminal device. For example, the access network device sends the CSI-RS to the terminal device in the second periodicity. After receiving the CSI-RS, the terminal device sends the third CSI to the access network device also in the second periodicity.

The access network device parses the third CSI sent by the terminal device, obtains the indication information of the second linear combination coefficient, and determines the second linear combination coefficient.

S460: The access network device determines the precoding matrix based on the first basis and the second linear combination coefficient.

In the method 400, the access network device and the terminal device jointly update a statistical eigen subspace basis based on the timing information, so that the second linear combination coefficient that is reported in the second periodicity and that is obtained by the access network device can match the first basis that is of the statistical eigen subspace and that is used to restore the precoding matrix. This improves accuracy of the precoding matrix, and improves system performance.

To understand the method 400 more clearly, the following then uses a schematic flowchart of air interface interaction between the access network device and the terminal device for description. FIG. 6 is a schematic flowchart of air interface interaction between an access network device and a terminal device according to this application. As shown in FIG. 6, in a 1st first periodicity, the access network device sends a CSI-RS to the terminal device in a second periodicity. The terminal device receives the CSI-RS. The terminal device determines a second basis $\hat{B}$ of statistical eigen subspace based on a result of current downlink channel measurement and results of one or more times of downlink channel measurement before the current measurement. The terminal device feeds back the second basis $\hat{B}$ to the access network device at a start moment of the 1st first periodicity. It should be understood that, in the 1st first periodicity, the access network device and the terminal device also update a basis. For this process, refer to the following descriptions of updating the basis by the access network device and the terminal device in a 2nd first periodicity. It should be further understood that, in the 1st first periodicity, the access network device receives, in the second periodicity, a first linear combination coefficient fed back by the terminal device. In the 2nd first periodicity, the access network device sends the CSI-RS to the terminal device in the second periodicity. The terminal device receives the CSI-RS. The terminal device determines a first basis B of the statistical eigen subspace based on a result of current downlink channel measurement and results of one or more times of downlink channel measurement before the current measurement, and feeds back the first basis B to the access network device at a start moment of the 2nd first periodicity. The terminal device determines a first linear combination coefficient $C_2$ based on the result of the current downlink channel measurement and a previous second basis $\hat{B}$ of the statistical eigen subspace, and feeds back the first linear combination coefficient $C_2$ to the access network device. It should be understood that the terminal device may feed back the first basis B and the first linear combination coefficient $C_2$ in one message, or may separately feed back the first basis B and the first linear combination coefficient $C_2$. The access network device currently uses

the second basis $\hat{B}$, and the access network device determines a precoding matrix based on the previous second basis $\hat{B}$of the statistical eigen subspace and the first linear combination coefficient $C_2$. The terminal device starts timing of a timer of the terminal device based on timing information (for example, after the terminal device sends the first basis B to the access network device), and the access network device starts timing of a timer of the access network device based on timing information (for example, the access network device starts the timing when receiving the first basis B fed back by the terminal device). The access network device sends the CSI-RS to the terminal device in the second periodicity. The terminal device receives the CSI-RS, and feeds back the first linear combination coefficient $C_2$ to the access network device based on a measurement result. The access network device still determines the precoding matrix based on the second basis $\hat{B}$ and the first linear combination coefficients $C_2$. When the timing information of the terminal device and the timing information of the access network device expire, the access network device and the terminal device simultaneously update the second basis $\hat{B}$ to the first basis B. The terminal device and the access network device reset respective timers. Then, the terminal device reports a second linear combination coefficient $C_2^{'}$ to the access network device based on the first basis B. The access network device determines the precoding matrix based on the first basis B obtained through the update and the second linear combination coefficient $C_2^{'}$ reported by the terminal device. The procedure described in FIG. 6 is performed after the terminal device feeds back a statistical eigen subspace basis in a next first periodicity. The access network device and the terminal device update the statistical eigen subspace basis based on the timing information, so that the access network device can match a corresponding statistical eigen subspace basis when receiving a linear combination coefficient in a short periodicity. This resolves a problem that the linear combination coefficient in the short periodicity does not match the statistical eigen subspace basis.

It should be understood that, in the foregoing descriptions of FIG. 6, that the terminal device reports a basis or a linear combination coefficient to the access network device is merely for ease of description. Generally, the terminal device does not report the basis or the linear combination coefficient to the access network device, but reports indication information of the basis or indication information of the linear combination coefficient. In this way, signaling overheads are reduced. FIG. 7, FIG. 9, and FIG. 10 are also for ease of description, and do not constitute any limitation on this application.

It should be further understood that, for descriptions of the first periodicity and the second periodicity in FIG. 6, refer to the descriptions of the first periodicity and the second periodicity in FIG. 4. Details are not described herein again.

In a possible implementation, a case in which the access network device does not obtain indication information of the first basis exists. For example, the access network device does not receive current first CSI; or the access network device receives current first CSI, but fails to parse the current first CSI, and does not obtain the indication information of the first basis. When the access network device does not obtain the indication information of the first basis, the method 400 may further include: The access network device sends retransmission signaling to the terminal device, where the retransmission signaling indicates the terminal device to retransmit first CSI. The terminal device receives the retransmission signaling. The terminal device retransmits the first CSI to the access network device.

For example, after sending the first CSI to the access network device, the terminal device starts the timing information. The terminal device receives the retransmission signaling within duration of the timing information. The terminal device stops current timing. The terminal device restarts the timer again after retransmitting the first CSI to the access network device. The access network device receives the retransmission signaling sent by the terminal device, to obtain the indication information of the first basis, and restarts the timer again. When time of the timer that is restarted again expires, the access network device and the terminal device simultaneously update the second basis to the first basis.

For another example, after sending the first CSI to the access network device, the terminal device starts the timing information. The terminal device receives the retransmission signaling within duration of the timing information. The terminal device retransmits the first CSI to the access network device. The access network device receives the retransmission signaling sent by the terminal device, to obtain the indication information of the first basis. When time of the timer expires, the access network device and the terminal device simultaneously update the second basis to the first basis. When neither the terminal device nor the access network device restarts the timer, duration of the timer should be set to be long. For example, the duration of the timer is greater than a propagation delay of the retransmission signaling.

When the access network device does not obtain the indication information of the first basis, the access network device sends the retransmission signaling to the terminal device to indicate the terminal device to retransmit the first CSI, so that the indication information of the first basis is re-obtained. Then, the access network device and the terminal device update the second basis of the statistical eigen subspace to the first basis based on the timing information. Therefore, the second linear combination coefficient obtained by the access network device based on received indication information that is of the second linear combination coefficient and that is reported in the second periodicity can match the first basis that is of the statistical eigen subspace and that is used to restore the precoding matrix. This improves accuracy of the precoding matrix and improves system performance.

Optionally, the retransmission signaling may be sent by using radio resource control (Radio Resource Control, RRC) signaling, media access control-control element (Media Access Control-Control Element, MAC-CE) signaling, or downlink control information (Downlink Control Information, DCI).

To understand a process in which the terminal device and the access network device update the statistical eigen subspace basis when the access network device sends the retransmission signaling more clearly, the following then uses a schematic flowchart of air interface interaction between the access network device and the terminal device for description. FIG. 7 is a schematic flowchart of air interface interaction between an access network device and a terminal device according to this application. As shown in FIG. 7, in a 1st first periodicity, the access network device sends a CSI-RS to the terminal device in a second periodicity. The terminal device receives the CSI-RS. The terminal device determines a second basis $\hat{B}$ of statistical eigen subspace based on a result of current downlink channel measurement and results of one or more times of downlink channel measurement before the current measurement. The terminal device feeds back the second basis $\hat{B}$ to the access network device at a start moment of the 1st first periodicity (which may be considered as the 1st first periodicity). It should be understood that, in the 1st first periodicity, the access network device and the terminal device also update a basis. For this process, refer to the following descriptions of updating the basis by the access network device and the terminal device in a 2nd first periodicity. It should be further understood that, in the 1st first periodicity, the access network device receives, in the second periodicity, a first linear combination coefficient fed back by the terminal device. In the 2nd first periodicity, the access network device sends the CSI-RS to the terminal device in the second periodicity. The terminal device receives the CSI-RS. The terminal device determines a first basis B of the statistical eigen subspace based on a result of current downlink channel measurement and results of one or more times of downlink channel measurement before the current measurement, and feeds back the first basis B to the access network device at a start moment of the 2nd first periodicity. The terminal device determines a first linear combination coefficient $C_2$ based on the result of the current downlink channel measurement and a previous second basis $\hat{B}$ of the statistical eigen subspace, and feeds back the first linear combination coefficient $C_2$ to the access network device. In this case, the access network device currently uses the second basis $\hat{B}$. The access network device determines a precoding matrix based on the second basis $\hat{B}$ and the first linear combination coefficient $C_2$. If the access network device fails to obtain the first basis B, the access network device sends retransmission signaling to the terminal device. The terminal device receives the retransmission signaling sent by the access network device, and retransmits the first basis B of the statistical eigen subspace to the access network device. In this case, the terminal device starts timing based on timing information after sending the retransmission signaling, and the access network device starts timing based on timing information after receiving the retransmission signaling. The access network device sends the CSI-RS to the terminal device in the second periodicity. The terminal device receives the CSI-RS, and feeds back the first linear combination coefficient $C_2$ to the access network device based on a measurement result. The terminal device still determines the precoding matrix based on the previous second basis $\hat{B}$ of the statistical eigen subspace and the first linear combination coefficient $C_2$. When the timing information of the terminal device and the timing information of the access network device expire, the access network device and the terminal device simultaneously update the second basis $\hat{B}$ to the first basis B. The terminal device and the access network device reset respective timers. Then, the terminal device reports a second linear combination coefficient $C_2^{'}$ to the access network device based on the first basis B. The access network device determines the precoding matrix based on the first basis B obtained through the update and the second linear combination coefficient $C_2^{'}$ reported by the terminal device. The procedure described in FIG. 7 is performed after the terminal device feeds back a statistical eigen subspace basis in a next first periodicity. When the access network device does not obtain indication information of the first basis, the access network device sends the retransmission signaling to the terminal device to indicate the terminal device to retransmit current first channel state information, so that the indication information of the first basis is re-obtained. Then, the access network device and the terminal device update the second basis of the statistical eigen subspace to the first basis based on the timing information. Therefore, the access network device can match a corresponding statistical eigen subspace basis when receiving a linear combination coefficient in a short periodicity. This resolves a problem that the linear combination coefficient in the short periodicity does not match the statistical eigen subspace basis.

It should be further understood that, for descriptions of the first periodicity and the second periodicity in FIG. 7, refer to the descriptions of the first periodicity and the second periodicity in FIG. 4. Details are not described herein again.

The following describes in detail another precoding matrix determining method 500 according to this application with reference to FIG. 8. FIG. 8 is a schematic flowchart of the precoding matrix determining method 500 according to this application. The method 500 may be applied to the foregoing application scenario. It is clear that the method 500 may alternatively be applied to another communication scenario. This is not limited in this application.

It should be further understood that, in this embodiment of this application, the method is described by using an example in which the method is performed by an access network device and a terminal device. By way of example and not limitation, the method may alternatively be performed by chips, chip systems, processors, or the like used in the terminal device and the access network device.

As shown in FIG. 8, the method 500 shown in FIG. 8 may include S510 to S570. The following describes steps in the method 500 in detail with reference to FIG. 8.

S510: The terminal device sends first CSI to the access network device, and correspondingly, the access network device receives the first CSI from the terminal device. The first CSI includes indication information of a first basis of statistical eigen subspace, a periodicity for sending the first CSI by the terminal device is a first periodicity, and the first basis indicates a change rule of a downlink channel in space domain and/or frequency domain, or the first basis further indicates a change rule of a downlink channel in joint space-frequency domain.

It should be understood that, for descriptions of the indication information of the first basis, refer to the descriptions of step S410 in the method 400. Details are not described herein again.

The terminal device periodically sends the first CSI to the access network device, and the sending periodicity is the first periodicity. To be specific, the terminal device sends the first CSI to the access network device at a start moment or an end moment of each first periodicity.

For descriptions of the first basis, refer to the corresponding descriptions in the method 400. To avoid repetition, details are not described herein again.

S520: The terminal device sends second CSI to the access network device, and correspondingly, the access network device receives the second CSI from the terminal device. The second CSI includes indication information of a first linear combination coefficient. A periodicity for sending the second CSI by the terminal device is a second periodicity, and the first linear combination coefficient is a combination coefficient corresponding to a second basis.

It should be understood that, for descriptions of the indication information of the first linear combination coefficient, refer to the descriptions of step S420 in the method 400. Details are not described herein again.

The first linear combination coefficient matches the second basis of the statistical eigen subspace. It should be understood that a statistical eigen subspace basis used when the terminal device sends the second CSI is the second basis, the second basis is reported to the access network device in a first periodicity before a first periodicity at which the terminal device sends the second CSI, and the first basis is fed back to the access network device in the first periodicity at which the terminal device sends the second CSI, that is, the second basis is a previous first basis.

The terminal device sends the second CSI to the access network device in the second periodicity. To be specific, the terminal device sends the second CSI to the access network device at a start moment or an end moment of each second periodicity. It should be noted that duration of the first periodicity and duration of the second periodicity may be determined by the access network device, and the duration of the first periodicity and the duration of the second periodicity are sent to the terminal device by using configuration information.

For descriptions of the first periodicity and the second periodicity, refer to related descriptions in the method 400. Details are not described herein again.

It should be understood that the first CSI and the second CSI may be simultaneously reported, or may be separately reported. In other words, the indication information of the first basis and the indication information of the first linear combination coefficient may be reported in one piece of CSI, or may be reported in different pieces of CSI.

In this case, a statistical eigen subspace basis used by the access network device is also the second basis, and the second basis is obtained by the access network device based on previous first CSI. In this case, the access network device determines a precoding matrix based on the second basis and the first linear combination coefficient.

It should be understood that, in step S510 and step S520, a basis used when the access network device determines the precoding matrix is the second basis, and the terminal device reports the second CSI based on the second basis.

S530: The access network device sends update indication information to the terminal device, where the update indication information indicates the terminal device to update the second basis of the statistical eigen subspace to the first basis, and correspondingly, the terminal device receives the update indication information from the access network device.

S540: After the access network device sends the update indication information to the terminal device, the access network device updates the second basis of the statistical eigen subspace to the first basis.

S550: The terminal device updates the second basis of the statistical eigen subspace to the first basis based on the update indication information.

S560: The terminal device sends third CSI to the access network device, and correspondingly, the access network device receives the third CSI from the terminal device.

The third CSI includes indication information of a second linear combination coefficient, and the third CSI is generated by the terminal device based on the updated second basis (namely, the first basis), that is, the terminal device generates the third CSI based on a first basis indicated by first CSI closest to a current moment. A periodicity for sending the third CSI by the terminal device is the second periodicity.

After both the terminal device and the access network device update the second basis to the first basis, the terminal device periodically sends the third CSI to the access network device. Correspondingly, the access network device periodically receives the third CSI from the terminal device. For example, the access network device sends a CSI-RS to the terminal device in the second periodicity. After receiving the CSI-RS, the terminal device sends the third CSI to the access network device also in the second periodicity.

The access network device parses the third CSI sent by the terminal device, obtains the indication information of the second linear combination coefficient, and determines the second linear combination coefficient.

S570: The access network device determines the precoding matrix based on the first basis and the second linear combination coefficient.

In the method 500, when the access network device determines a new statistical eigen subspace basis, the access network device sends an update indication information to the terminal device to indicate the terminal device to update a statistical eigen subspace basis, and simultaneously, the access network device updates the second basis to the first basis. In this way, the access network device and the terminal device jointly update the statistical eigen subspace basis, so that the second linear combination coefficient that is reported in the second periodicity and that is obtained by the access network device can match the first basis that is of the statistical eigen subspace and that is used to restore the precoding matrix. This improves accuracy of the precoding matrix and improves system performance.

To understand the method 500 more clearly, the following then uses a schematic flowchart of air interface interaction between the access network device and the terminal device for description. FIG. 9 is a schematic flowchart of air interface interaction between an access network device and a terminal device according to this application. As shown in FIG. 9, in a 1st first periodicity, the access network device sends a CSI-RS to the terminal device in a second periodicity. The terminal device receives the CSI-RS. The terminal device determines a second basis $\hat{B}$ of statistical eigen subspace based on a result of current downlink channel measurement and results of one or more times of downlink channel measurement before the current measurement. The terminal device feeds back the second basis $\hat{B}$ to the access network device at a start moment of the 1st first periodicity (which may be considered as the 1st first periodicity). It should be understood that, in the 1st first periodicity, the access network device and the terminal device also update a basis. For this process, refer to the following descriptions of updating the basis by the access network device and the terminal device in a 2nd first periodicity. It should be further understood that, in the 1st first periodicity, the access network device receives, in the second periodicity, a first linear combination coefficient fed back by the terminal device. In the 2nd first periodicity, the access network device sends the CSI-RS to the terminal device in the second periodicity. The terminal device receives the CSI-RS. The terminal device determines a first basis B of the statistical eigen subspace based on a result of current downlink channel measurement and results of one or more times of downlink channel measurement before the current measurement, and feeds back the first basis B to the access network device at a start moment of the 2nd first periodicity. The terminal device determines a first linear combination coefficient $C_2$ based on the result of the current downlink channel measurement and a previous second basis $\hat{B}$ of the statistical eigen subspace, and feeds back the first linear combination coefficient $C_2$ to the access network device. It should be understood that the terminal device may feed back the first basis B and the first linear combination coefficient $C_2$ in one message, or may separately feed back the first basis B and the first linear combination coefficient $C_2$. In this case, the access network device currently uses the second basis $\hat{B}$, and the access network device determines a precoding matrix based on the second basis $\hat{B}$ and the first linear combination coefficient $C_2$. The access network device updates the second basis $\hat{B}$ to the first basis B, and the access network device sends an update indication information to the terminal device to indicate the terminal device to update the second basis $\hat{B}$ to the first basis B. After receiving the indication information, the terminal device updates the second basis $\hat{B}$ to the first basis B. Then, the terminal device reports a second linear combination coefficient $C_2^{'}$ to the access network device based on the first basis B. The access network device determines the precoding matrix based on the first basis B and the second linear combination coefficient $C_2^{'}$ reported by the terminal device. The procedure described in FIG. 9 is performed after the terminal device feeds back a statistical eigen subspace basis in a next first periodicity.

It should be further understood that, for descriptions of the first periodicity and the second periodicity in FIG. 9, refer to the descriptions of the first periodicity and the second periodicity in FIG. 4. Details are not described herein again.

Optionally, the indication information may be sent by using radio resource control (Radio Resource Control, RRC) signaling, media access control-control element (Media Access Control-Control Element, MAC-CE) signaling, or downlink control information (Downlink Control Information, DCI).

In a possible implementation, a case in which the access network device does not obtain indication information of the first basis exists. For example, the access network device does not receive current first channel state information; or the access network device receives current first channel state information, but fails to parse the current first channel state information, and does not obtain the indication information of the first basis. When the access network device does not obtain the indication information of the first basis, the method 500 may further include: The access network device sends retransmission signaling to the terminal device, where the retransmission signaling indicates the terminal device to retransmit first channel state information. The terminal device receives the retransmission signaling and retransmits the first channel state information to the access network device. The access network device receives the first channel state information retransmitted by the terminal device, to obtain the indication information of the first basis. After the access network device obtains the indication information of the first basis, the access network device sends the indication information to the terminal device, where the indication information indicates the terminal device to update the second basis of the statistical eigen subspace to the first basis. After the access network device sends the indication information to the terminal device, the access network device updates the second basis of the statistical eigen subspace to the first basis.

When the access network device does not obtain the indication information of the first basis, the access network device sends the retransmission signaling to the terminal device to indicate the terminal device to retransmit the first channel state information, so that the indication information of the first basis is re-obtained. Then, when the access network device determines a new statistical eigen subspace basis, the access network device sends the indication information to the terminal device to indicate the terminal device to update the statistical eigen subspace basis, so that the access network device and the terminal device can synchronously update the statistical eigen subspace basis. Therefore, the second linear combination coefficient obtained by the access network device based on received indication information that is of the second linear combination coefficient and that is reported in the second periodicity can match the first basis that is of the statistical eigen subspace and that is used to restore the precoding matrix. This improves accuracy of the precoding matrix and improves system performance.

To understand a process in which the terminal device and the access network device update the statistical eigen subspace basis when the access network device sends the retransmission signaling more clearly, the following then uses a schematic flowchart of air interface interaction between the access network device and the terminal device for description. FIG. 10 is a schematic flowchart of air interface interaction between an access network device and a terminal device according to this application. As shown in FIG. 10, in a 1st first periodicity, the access network device sends a CSI-RS to the terminal device in a second periodicity. The terminal device receives the CSI-RS. The terminal device determines a second basis $\hat{B}$ of statistical eigen subspace based on a result of current downlink channel measurement and results of one or more times of downlink channel measurement before the current measurement. The terminal device feeds back the second basis $\hat{B}$ to the access network device at a start moment of the 1st first periodicity (which may be considered as the 1st first periodicity). It should be understood that, in the 1st first periodicity, the access network device and the terminal device also update a basis. For this process, refer to the following descriptions of updating the basis by the access network device and the terminal device in a 2nd first periodicity. It should be further understood that, in the 1st first periodicity, the access network device receives, in the second periodicity, a first linear combination coefficient fed back by the terminal device. In the 2nd first periodicity, the access network device sends the CSI-RS to the terminal device in the second periodicity. The terminal device receives the CSI-RS. The terminal device determines a first basis B of the statistical eigen subspace based on a result of current downlink channel measurement and results of one or more times of downlink channel measurement before the current measurement, and feeds back the first basis B to the access network device at a start moment of the 2nd first periodicity. The terminal device determines a first linear combination coefficient $C_2$ based on the result of the current downlink channel measurement and a previous second basis $\hat{B}$ of the statistical eigen subspace, and feeds back the first linear combination coefficient $C_2$ to the access network device. In this case, the access network device currently uses the second basis $\hat{B}$. The access network device determines a precoding matrix based on the second basis $\hat{B}$ and the first linear combination coefficient $C_2$. If the access network device fails to obtain the first basis B, the access network device sends retransmission signaling to the terminal device. The terminal device receives the retransmission signaling sent by the access network device, and retransmits the first basis B of the statistical eigen subspace to the access network device. After the access network device obtains the first basis B, the access network device updates the second basis $\hat{B}$ to the first basis B, and the access network device sends an update indication to the terminal device to indicate the terminal device to update the second basis $\hat{B}$ to the first basis B. After receiving the indication information, the terminal device updates the second basis $\hat{B}$ to the first basis B. Then, the terminal device reports a second linear combination coefficient $C_2'$ to the access network device based on the first basis B. The access network device determines the precoding matrix based on the first basis B and the second linear combination coefficient $C_2'$ reported by the terminal device. The procedure described in FIG. 10 is performed after the terminal device feeds back a statistical eigen subspace basis in a next first periodicity.

It should be further understood that, for descriptions of the first periodicity and the second periodicity in FIG. 10, refer to the descriptions of the first periodicity and the second periodicity in FIG. 4. Details are not described herein again.

FIG. 11 is a diagram of module interaction between a terminal device and an access network device according to this application. The access network device and the terminal device each include an RRC signaling exchange module, a MAC signaling exchange module, and a port physical layer (Port Physical Layer, PHY) signaling and data exchange module. The RRC signaling exchange module is a module used by the access network device and the terminal device to send and receive RRC signaling. The MAC signaling exchange module is a module used by the access network device and the terminal device to send and receive MAC-CE signaling. The PHY signaling and data exchange module is a module used by the access network device and the terminal device to send and receive downlink control signaling and downlink data. The downlink control signaling may be sent and received through a downlink control channel (Physical Downlink Control Channel, PDCCH), and the downlink data may be sent and received through a physical downlink shared channel (Physical Downlink Shared CHannel, PDSCH).

Both indication information and retransmission signaling in this application may be sent by using the RRC signaling, the MAC-CE signaling, or DCI.

The foregoing describes in detail methods in embodiments of this application with reference to FIG. 1 to FIG. 11. The following describes in detail communication apparatuses in embodiments of this application with reference to FIG. 12 to FIG. 14.

FIG. 12 is a block diagram of a communication apparatus 600 according to an embodiment of this application.

In some embodiments, the apparatus 600 may be a terminal device, or may be a chip or a circuit, for example, a chip or a circuit that may be disposed in a terminal device.

In some embodiments, the apparatus 600 may be an access network device, or may be a chip or a circuit, for example, a chip or a circuit that may be disposed in an access network device.

In a possible manner, the apparatus 600 may include a processing unit 610 (that is, an example of a processor) and a transceiver unit 630. In some possible implementations, the processing unit 610 may be further referred to as a determining unit. In some possible implementations, the transceiver unit 630 may include a receiving unit and a sending unit.

Optionally, the transceiver unit 630 may be implemented by a transceiver, a transceiver-related circuit, or an interface circuit.

Optionally, the apparatus may further include a storage unit 620. In a possible manner, the storage unit 620 is configured to store instructions. Optionally, the storage unit may also be configured to store data or information. The storage unit 620 may be implemented by a memory.

In some possible designs, the processing unit 610 is configured to execute the instructions stored in the storage unit 620, to enable the apparatus 600 to implement steps performed by the terminal device in the foregoing method. Alternatively, the processing unit 610 may be configured to invoke the data in the storage unit 620, to enable the apparatus 600 to implement steps performed by the terminal device in the foregoing method.

In some possible designs, the processing unit 610 is configured to execute the instructions stored in the storage unit 620, to enable the apparatus 600 to implement steps performed by the access network device in the foregoing method. Alternatively, the processing unit 610 may be configured to invoke the data in the storage unit 620, to enable the apparatus 600 to implement steps performed by the access network device in the foregoing method.

For example, the processing unit 610, the storage unit 620, and the transceiver unit 630 may communicate with each other through an internal connection path, to transfer a control signal and/or a data signal. For example, the storage unit 620 is configured to store a computer program, and the processing unit 610 may be configured to invoke the computer program from the storage unit 620 and run the computer program, to control the transceiver unit 630 to receive a signal and/or send a signal, so that steps of the terminal device or the access network device in the foregoing method are completed. The storage unit 620 may be integrated into the processing unit 610, or may be disposed separately from the processing unit 610.

Optionally, if the apparatus 600 is a communication device (for example, the terminal device or the access network device), the transceiver unit 630 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 600 is a chip or a circuit, the transceiver unit 630 includes an input interface and an output interface.

In an implementation, it may be considered that a function of the transceiver unit 630 is implemented by a transceiver circuit or a dedicated transceiver chip. It may be considered that the processing unit 610 is implemented by a dedicated processing chip, a processing circuit, a processing unit, or a general-purpose chip.

In another implementation, it may be considered that the communication device (for example, the terminal device or the access network device) provided in embodiments of this application is implemented by a general-purpose computer. In other words, program code for implementing functions of the processing unit 610 and the transceiver unit 630 is stored in the storage unit 620, and a general-purpose processing unit implements the functions of the processing unit 610 and the transceiver unit 630 by executing the code in the storage unit 620.

In some embodiments, the apparatus 600 may be a terminal device, or a chip or a circuit disposed in a terminal device.

When the apparatus 600 is the terminal device, or the chip or the circuit disposed in the terminal device, the transceiver unit 630 is configured to send first channel state information to the access network device, where the first channel state information includes indication information of a first basis of statistical eigen subspace, and a periodicity for sending the first channel state information by the terminal device is a first periodicity. The transceiver unit 630 is further configured to: before the terminal device updates a second basis to the first basis, send second channel state information to the access network device, where the second channel state information includes indication information of a first linear combination coefficient, a periodicity for sending the second channel state information by the transceiver unit 630 is a second periodicity, the first periodicity is greater than the second periodicity, and the first linear combination coefficient is a combination coefficient corresponding to the second basis. The second channel state information is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The processing unit 610 is configured to update the second basis to the first basis based on trigger information. The transceiver unit 630 is further configured to: after the terminal device updates the second basis to the first basis, send third channel state information to the access network device, where the third channel state information includes indication information of a second linear combination coefficient, the third channel state information is generated by the terminal device based on the updated second basis, and a periodicity for sending the third channel state information by the terminal device is the second periodicity.

Optionally, the processing unit 610 is further configured to: when timing information reaches specified time, update the second basis to the first basis.

Optionally, the timing information is obtained by the transceiver from the access network device by using configuration information, or the timing information is predefined.

Optionally, the transceiver unit 630 is configured to receive update indication information sent by the access network device, where the update indication information indicates the terminal device to update the second basis of the statistical eigen subspace to the first basis. The processing unit is specifically configured to update the second basis to the first basis based on the update indication information.

Optionally, the transceiver unit 630 is further configured to: receive retransmission signaling sent by the access network device, where the retransmission signaling indicates the terminal device to retransmit the first channel state information; and retransmit the first channel state information to the access network device based on the retransmission signaling.

Optionally, duration of the timing information is information locally configured on the terminal device; or the transceiver unit receives the configuration information sent by the access network device, where the configuration information includes duration of the first periodicity, duration of the second periodicity, and duration of the timing information.

Optionally, at least one of the update indication information, the configuration information, or the retransmission signaling is included in radio resource control RRC signaling, media access control-control element MAC-CE signaling, or downlink control information DCI.

When the apparatus 600 is configured on the terminal device or is the terminal device, modules or units in the apparatus 600 may be configured to perform actions or processing processes performed by the terminal device in the foregoing method. To avoid repetition, detailed descriptions thereof are omitted herein.

In some embodiments, the apparatus 600 may be the access network device, or the chip or the circuit disposed in the access network device. When the apparatus 600 is the access network device, or the chip or the circuit disposed in the access network device, the transceiver unit 630 is configured to receive first channel state information sent by the terminal device, where the first channel state information includes indication information of a first basis of statistical eigen subspace, and a periodicity for receiving the first channel state information by the transceiver unit 630 is a first periodicity. The processing unit is configured to parse the first channel state information. The transceiver unit 630 is configured to receive second channel state information sent by the terminal device, where the second channel state information includes indication information of a first linear combination coefficient, a periodicity for receiving the second channel state information by the transceiver unit 630 is a second periodicity, the first periodicity is greater than the second periodicity, and the first linear combination coefficient is a combination coefficient corresponding to a second basis. A statistical eigen subspace basis currently used by the processing unit 610 is the second basis of the statistical eigen subspace, the second channel state information is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The processing unit is configured to parse the second channel state information. The processing unit 610 is configured to update the second basis to the first basis based on timing information. The transceiver unit 630 receives third channel state information sent by the terminal device, where the third channel state information includes indication information of a second linear combination coefficient, the third channel state information is generated by the terminal device based on the updated second basis, and a periodicity for sending the third channel state information by the transceiver unit 630 is the second periodicity. The processing unit 610 is configured to parse the third channel state information. The processing unit 610 is configured to determine a precoding matrix based on the first basis and the second linear combination coefficient.

Optionally, the timing information is determined by the access network device or predefined.

Optionally, when the timing information is determined by the access network device, the transceiver is further configured to send configuration information to the terminal device.

Optionally, the transceiver unit 630 is further configured to: when the first basis is failed to be obtained, send retransmission signaling to the terminal device, where the retransmission signaling indicates the terminal device to retransmit the first channel state information; and receive the first channel state information retransmitted by the terminal device.

Optionally, that the access network device fails to obtain the first basis includes: The transceiver unit fails to receive the first channel state information. Alternatively, the processing unit fails to parse the first channel state information.

Optionally, duration of the timing information is information locally configured on the access network device; or the transceiver unit sends indication information to the terminal device, where the indication information includes duration of the first periodicity, duration of the second periodicity, and duration of the timing information.

Optionally, at least one of the configuration information and the retransmission signaling is included in radio resource control RRC signaling, media access control-control element MAC-CE signaling, or downlink control information DCI.

When the apparatus 600 is configured on the access network device or is the access network device, modules or units in the apparatus 600 may be configured to perform actions or processing processes performed by the access network device in the foregoing method. To avoid repetition, detailed descriptions thereof are omitted herein.

In some embodiments, the apparatus 600 may be the access network device, or the chip or the circuit disposed in the access network device. When the apparatus 600 is the access network device, or the chip or the circuit disposed in the access network device, the transceiver unit 630 is configured to receive first channel state information sent by the terminal device, where the first channel state information includes indication information of a first basis of statistical eigen subspace, and a periodicity for receiving the first channel state information by the transceiver unit 630 is a first periodicity. The processing unit 610 is configured to parse the first channel state information. The transceiver unit 630 is configured to receive second channel state information sent by the terminal device, where the second channel state information includes indication information of a first linear combination coefficient, a periodicity for receiving the second channel state information by the access network device is a second periodicity, the first periodicity is greater than the second periodicity, and the first linear combination coefficient is a combination coefficient corresponding to a second basis. A statistical eigen subspace basis currently used by the processing unit 610 is the second basis of the statistical eigen subspace, the second channel state information is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain. The processing unit 610 is configured to parse the second channel state information. The access network device updates the second basis to the first basis. The transceiver unit 630 sends update indication information to the terminal device, where the update indication information indicates the terminal device to update the second basis to the first basis. The transceiver unit 630 receives third channel state information sent by the terminal device, where the third channel state information includes indication information of a second linear combination coefficient, the third channel state information is generated by the terminal device based on the updated second basis, and a periodicity for sending the third channel state information by the terminal device is the second periodicity. The processing unit 610 is configured to parse the third channel state information. The processing unit 610 is configured to determine a precoding matrix based on the first basis and the second linear combination coefficient.

Optionally, the transceiver unit 630 is further configured to: when the first basis is failed to be obtained, send retransmission signaling to the terminal device, where the retransmission signaling indicates the terminal device to retransmit the first channel state information; and receive the first channel state information retransmitted by the terminal device.

Optionally, that the first basis is failed to be obtained includes: The transceiver unit 630 fails to receive the first channel state information. Alternatively, the processing unit 610 fails to parse the first channel state information.

Optionally, the access network device sends duration of the first periodicity and/or duration of the second periodicity to the terminal device by using second indication information.

Optionally, at least one of the update indication information and the retransmission signaling is sent by using radio resource control RRC signaling, media access control-control element MAC-CE signaling, or downlink control information DCI.

For concepts, explanations, detailed descriptions, and other steps of the apparatus 600 that are related to the technical solutions provided in embodiments of this application, refer to the descriptions of the content in the foregoing method or other embodiments. Details are not described herein again.

It should be noted that, in this application, the processing unit 610 may be implemented by a processor, the storage unit 620 may be implemented by a memory, and the transceiver unit 630 may be implemented by a transceiver. FIG. 13 is a diagram of a structure of a communication apparatus 700 according to this application. The communication apparatus 700 may include a processor 710, a memory 720, and a transceiver 730. The processor 710, the memory 720, and the transceiver 730 are respectively configured to implement functions of the processing unit 610, the storage unit 620, and the transceiver unit 630. Details are not described herein.

FIG. 14 is a diagram of a structure of a terminal device 800 according to this application. The terminal device 800 may perform the actions performed by the terminal device in the foregoing method embodiments.

For ease of description, FIG. 14 shows only main components of the terminal device. As shown in FIG. 14, the terminal device 800 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device to perform the actions described in the foregoing embodiments of an indication method for a precoding matrix used for transmission. The memory is mainly configured to store the software program and the data, for example, store a codebook described in the foregoing embodiments. The control circuit is mainly configured to: convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 14 shows only one memory and only one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 14 integrates functions of the baseband processor and the central processing unit. A person skilled in the art may understand that the baseband processor and the central processing unit may alternatively be separate processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 810 of the terminal device 800, and the processor that have a processing function may be considered as a processing unit 820 of the terminal device 800. As shown in FIG. 14, the terminal device 800 includes the transceiver unit 810 and the processing unit 820. The transceiver unit may also be referred to as a transceiver, a transceiver machine, a transceiver apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit includes a receiving unit and a sending unit. For example, the receiving unit may also be referred to as a receiver, a receiver machine, or a receiver circuit, and the sending unit may also be referred to as a transmitter, a transmitter machine, or a transmitter circuit.

FIG. 15 is a diagram of a structure of an access network device 900 according to an embodiment of this application. The access network device 900 may be configured to implement functions of the access device (for example, a first access network device, a second access network device, or a third access network device) in the foregoing method. The access network device 900 includes one or more radio frequency units such as a remote radio unit (remote radio unit, RRU) 910 and one or more baseband units (baseband units, BBUs) (which may also be referred to as a digital unit (digital unit, DU)) 920. The RRU 910 may be referred to as a transceiver unit, a transceiver, a transceiver circuit, a transceiver machine, or the like, and may include at least one antenna 911 and a radio frequency unit 912. The RRU 910 part is mainly configured to: send and receive a radio frequency signal, and perform conversion between a radio frequency signal and a baseband signal, for example, is configured to send the signaling messages in the foregoing embodiments to the terminal device. The BBU 920 part is mainly configured to: perform baseband processing, control a base station, and the like. The RRU 910 and the BBU 920 may be physically disposed together, or may be physically disposed separately, that is, a distributed base station.

The BBU 920 is a control center of the base station, may also be referred to as a processing unit, and is mainly configured to complete a baseband processing function such as channel coding, multiplexing, modulation, or spreading. For example, the BBU (the processing unit) 920 may be configured to control a base station 40 to perform an operation procedure related to the access network device in the foregoing method embodiments.

In an example, the BBU 920 may include one or more boards, and a plurality of boards may jointly support a radio access network (for example, an LTE system or a 5G system) of a single access standard, or may separately support radio access networks of different access standards. The BBU 920 further includes a memory 921 and a processor 922. The memory 921 is configured to store necessary instructions and data. For example, the memory 921 stores the codebook and the like in the foregoing embodiments. The processor 922 is configured to control the base station to perform a necessary action, for example, configured to control the base station to perform an operation procedure related to the access network device in the foregoing method embodiments. The memory 921 and the processor 922 may serve one or more boards. In other words, a memory and a processor may be disposed on each board. Alternatively, a plurality of boards may share a same memory and a same processor. In addition, a necessary circuit may be further disposed on each board.

In a possible implementation, with development of a system-on-chip (system-on-chip, SoC) technology, all or some functions of the parts 920 and 910 may be implemented by using the SoC technology, for example, implemented by one base station function chip. The base station function chip integrates components such as a processor, a memory, and an antenna port. A program of a base station-related function is stored in the memory, and the processor executes the program to implement the base station-related function. Optionally, the base station function chip can also read from an external memory of the chip, to implement the base station-related function.

It should be understood that the structure of the access network device shown in FIG. 15 is merely a possible form, and should not constitute any limitation on embodiments of this application. In this application, a possibility that there may be a base station structure in another form in the future is not excluded.

It should be understood that, the processor in embodiments of this application may be a central processing unit (central processing unit, CPU), or the processor may be another general purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. A general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer-readable medium. The computer-readable medium stores a computer program. When the computer program is executed by a computer, the steps performed by the terminal device or the steps performed by the access network device in any one of the foregoing embodiments are implemented.

An embodiment of this application further provides a computer program product. When the computer program product is executed by a computer, the steps performed by the terminal device or the steps performed by the access network device in any one of the foregoing embodiments are implemented.

An embodiment of this application further provides a system chip. The system chip includes a communication unit and a processing unit. The processing unit may be, for example, a processor. The communication unit may be, for example, a communication interface, an input/output interface, a pin, or a circuit. The processing unit may execute computer instructions, so that the chip in the communication apparatus performs the steps performed by the terminal device or the steps performed by the access network device provided in the foregoing embodiments of this application.

Optionally, the computer instructions are stored in a storage unit.

According to the method provided in embodiments of this application, an embodiment of this application further provides a communication system, including the foregoing access network device and terminal device.

Embodiments of this application may be used alone or used in combination. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

It should be understood that the term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects. "At least one" means one or more. "At least one of A and B" is similar to "A and/or B", is used to describe an association relationship between associated objects, and indicates that there may be three relationships. For example, at least one of A and B may indicate the following three cases: Only A exists, both A and B exist, and only B exists.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In some embodiments according to this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, technical solutions of this application essentially, or the part contributing to the current technology, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A channel state information feedback method, comprising:

sending, by a terminal device, first channel state information CSI to an access network device, wherein the first CSI comprises indication information of a first basis of statistical eigen subspace, and a periodicity for sending the first CSI by the terminal device is a first periodicity;

before the terminal device updates a second basis to the first basis, sending, by the terminal device, second CSI to the access network device, wherein the second CSI comprises indication information of a first linear combination coefficient, a periodicity for sending the second CSI by the terminal device is a second periodicity, the first periodicity is greater than the second periodicity, and the first linear combination coefficient is a combination coefficient corresponding to the second basis, wherein

the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain;

updating, by the terminal device, the second basis to the first basis based on trigger information; and

after the terminal device updates the second basis to the first basis, sending, by the terminal device, third channel state information to the access network device, wherein the third channel state information comprises indication information of a second linear combination coefficient, the third channel state information is generated by the terminal device based on the updated second basis, and a periodicity for sending the third channel state information by the terminal device is the second periodicity.

**2.** The method according to claim 1, wherein when the trigger information is timing information, the updating, by the terminal device, the second basis to the first basis based on trigger information comprises: when the timing information reaches specified time, updating, by the terminal device, the second basis to the first basis.

3. The method according to claim 2, wherein the timing information is obtained by the terminal device from the access network device by using configuration information, or the timing information is predefined.

4. The method according to claim 1, wherein the method further comprises:

   receiving, by the terminal device, update indication information sent by the access network device, wherein the update indication information indicates the terminal device to update the second basis of the statistical eigen subspace to the first basis; and
   the updating, by the terminal device, the second basis to the first basis based on trigger information comprises:
   updating, by the terminal device, the second basis to the first basis based on the update indication information.

5. The method according to any one of claims 1 to 4, wherein before the updating, by the terminal device, the second basis to the first basis based on trigger information, the method further comprises:

   receiving, by the terminal device, retransmission signaling sent by the access network device, wherein the retransmission signaling indicates the terminal device to retransmit the first CSI; and
   retransmitting, by the terminal device, the first CSI to the access network device based on the retransmission signaling.

6. The method according to any one of claims 3 to 5, wherein at least one of the update indication information, the configuration information, and the retransmission signaling is comprised in radio resource control RRC signaling, media access control-control element MAC-CE signaling, or downlink control information DCI.

7. A channel state information feedback method, comprising:

   receiving and parsing, by an access network device, first channel state information CSI sent by a terminal device, wherein the first CSI comprises indication information of a first basis of statistical eigen subspace, and a periodicity for receiving the first CSI by the access network device is a first periodicity;
   before the access network device updates a second basis to the first basis, receiving and parsing, by the access network device, second CSI sent by the terminal device, wherein the second CSI comprises indication information of a first linear combination coefficient, a periodicity for receiving the second CSI by the access network device is a second periodicity, the first periodicity is greater than the second periodicity, and the first linear combination coefficient is a combination coefficient corresponding to the second basis, wherein
   a statistical eigen subspace basis currently used by the access network device is the second basis, the second CSI is generated by the terminal device based on the second basis, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain;
   updating, by the access network device, the second basis to the first basis based on timing information;
   after the access network device updates the second basis to the first basis, receiving and parsing, by the access network device, third CSI sent by the terminal device, wherein the third CSI comprises indication information of a second linear combination coefficient, the third CSI is generated by the terminal device based on the updated second basis, and a periodicity for sending the third CSI by the terminal device is the second periodicity; and
   determining, by the access network device, a precoding matrix based on the first basis and the second linear combination coefficient.

8. The method according to claim 7, wherein the timing information is determined by the access network device or predefined.

9. The method according to claim 8, wherein when the timing information is determined by the access network device, the method further comprises: sending, by the access network device, configuration information to the terminal device.

10. The method according to any one of claims 7 to 9, wherein before the updating, by the access network device, the second basis to the first basis based on timing information, the method further comprises:

   when the access network device fails to obtain the first basis, sending, by the access network device, retransmission signaling to the terminal device, wherein the retransmission signaling indicates the terminal device to retransmit the first CSI; and

receiving, by the access network device, the first CSI retransmitted by the terminal device.

**11.** The method according to claim 10, wherein that the access network device fails to obtain the first basis comprises:

the access network device fails to receive the first CSI; or

the access network device fails to parse the first CSI.

**12.** The method according to any one of claims 9 to 11, wherein at least one of the configuration information and the retransmission signaling is comprised in radio resource control RRC signaling, media access control-control element MAC-CE signaling, or downlink control information DCI.

**13.** A channel state information feedback method, comprising:

receiving and parsing, by an access network device, first channel state information CSI sent by a terminal device, wherein the first CSI comprises indication information of a first basis of statistical eigen subspace, and a periodicity for receiving the first CSI by the access network device is a first periodicity;

before the access network device updates a second basis to the first basis, receiving and parsing, by the access network device, second CSI sent by the terminal device, wherein the second CSI comprises indication information of a first linear combination coefficient, a periodicity for receiving the second CSI by the access network device is a second periodicity, the first periodicity is greater than the second periodicity, and the first linear combination coefficient is a combination coefficient corresponding to the second basis, wherein

a statistical eigen subspace basis currently used by the access network device is the second basis, the second CSI is generated by the terminal device based on the second basis, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain;

updating, by the access network device, the second basis to the first basis;

sending, by the access network device, update indication information to the terminal device, wherein the update indication information indicates the terminal device to update the second basis to the first basis;

after the access network device updates the second basis to the first basis, receiving and parsing, by the access network device, third CSI sent by the terminal device, wherein the third CSI comprises indication information of a second linear combination coefficient, the third CSI is generated by the terminal device based on the updated second basis, and a periodicity for sending the third CSI by the terminal device is the second periodicity; and

determining, by the access network device, a precoding matrix based on the first basis and the second linear combination coefficient.

**14.** The method according to claim 13, wherein before the updating, by the access network device, the second basis to the first basis, the method further comprises:

when the access network device fails to obtain the first basis, sending, by the access network device, retransmission signaling to the terminal device, wherein the retransmission signaling indicates the terminal device to retransmit the first CSI; and

receiving, by the access network device, the first CSI retransmitted by the terminal device.

**15.** The method according to claim 14, wherein that the access network device fails to obtain the first basis comprises:

the access network device fails to receive the first CSI; or

the access network device fails to parse the first CSI.

**16.** The method according to any one of claims 13 to 15, wherein at least one of the update indication information and the retransmission signaling is sent by using radio resource control RRC signaling, media access control-control element MAC-CE signaling, or downlink control information DCI.

**17.** A terminal device, comprising:

a transceiver, configured to send first channel state information CSI to an access network device, wherein the first CSI comprises indication information of a first basis of statistical eigen subspace, and a periodicity for sending the first CSI by the terminal device is a first periodicity, wherein

the transceiver is further configured to: before the terminal device updates a second basis to the first basis, send second CSI to the access network device, wherein the second CSI comprises indication information of a first linear combination coefficient, a periodicity for sending the second CSI by the terminal device is a second periodicity, the first periodicity is greater than the second periodicity, and the first linear combination coefficient is a combination coefficient corresponding to the second basis, wherein

the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain; and

a processor, configured to update the second basis to the first basis based on trigger information, wherein

the transceiver is further configured to: after the terminal device updates the second basis to the first basis, send third CSI to the access network device, wherein the third CSI comprises indication information of a second linear combination coefficient, the third CSI is generated by the terminal device based on the updated second basis, and a periodicity for sending the third CSI by the terminal device is the second periodicity.

**18.** The terminal device according to claim 17, wherein the processor is further configured to:
when timing information reaches specified time, update the second basis to the first basis.

**19.** The terminal device according to claim 18, wherein the timing information is obtained by the transceiver from the access network device by using configuration information, or the timing information is predefined.

**20.** The terminal device according to claim 17, wherein the transceiver is configured to receive update indication information sent by the access network device, wherein the update indication information indicates the terminal device to update the second basis of the statistical eigen subspace to the first basis; and
the processor is specifically configured to:
update the second basis to the first basis based on the update indication information.

**21.** The terminal device according to any one of claims 17 to 20, wherein the transceiver is further configured to:

receive retransmission signaling sent by the access network device, wherein the retransmission signaling indicates the terminal device to retransmit the first CSI; and
retransmit the first CSI to the access network device based on the retransmission signaling.

**22.** The terminal device according to any one of claims 19 to 21, wherein at least one of the update indication information, the configuration information, and the retransmission signaling is comprised in radio resource control RRC signaling, media access control-control element MAC-CE signaling, or downlink control information DCI.

**23.** An access network device, comprising:

a transceiver, configured to receive first channel state information CSI sent by a terminal device, wherein the first CSI comprises indication information of a first basis of statistical eigen subspace, and a periodicity for receiving the first CSI by the access network device is a first periodicity; and

a processor, configured to parse the first CSI, wherein

the transceiver is configured to: before the access network device updates a second basis to the first basis, receive second CSI sent by the terminal device, wherein the second CSI comprises indication information of a first linear combination coefficient, a periodicity for receiving the second CSI by the access network device is a second periodicity, the first periodicity is greater than the second periodicity, and the first linear combination coefficient is a combination coefficient corresponding to the second basis, wherein

a statistical eigen subspace basis currently used by the processor is the second basis of the statistical eigen subspace, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain;

the processor is configured to parse the second CSI;

the processor is configured to update the second basis to the first basis based on timing information;

the transceiver is configured to: after the access network device updates the second basis to the first basis, receive third CSI sent by the terminal device, wherein the third CSI comprises indication information of a second linear combination coefficient, the third CSI is generated by the terminal device based on the updated second basis, and a periodicity for sending the third CSI by the terminal device is the second periodicity;
the processor is configured to parse the third CSI; and
the processor is configured to determine a precoding matrix based on the first basis and the second linear combination coefficient.

**24.** The access network device according to claim 23, wherein the timing information is determined by the access network device or predefined.

**25.** The access network device according to claim 24, wherein when the timing information is determined by the access network device, the transceiver is further configured to send configuration information to the terminal device.

**26.** The access network device according to any one of claims 23 to 25, wherein the transceiver is further configured to:

when the first basis is failed to be obtained, send retransmission signaling to the terminal device, wherein the retransmission signaling indicates the terminal device to retransmit the first CSI; and
receive the first CSI retransmitted by the terminal device.

**27.** The access network device according to claim 26, wherein that the access network device fails to obtain the first basis comprises:

the transceiver fails to receive the first CSI; or
the processor fails to parse the first CSI.

**28.** The access network device according to any one of claims 25 to 27, wherein at least one of the configuration information and the retransmission signaling is comprised in radio resource control RRC signaling, media access control-control element MAC-CE signaling, or downlink control information DCI.

**29.** An access network device, comprising:

a transceiver, configured to receive first channel state information CSI sent by a terminal device, wherein the first CSI comprises indication information of a first basis of statistical eigen subspace, and a periodicity for receiving the first CSI by the access network device is a first periodicity; and
a processor, configured to parse the first CSI, wherein
the transceiver is configured to: before the access network device updates a second basis to the first basis, receive second CSI sent by the terminal device, wherein the second CSI comprises indication information of a first linear combination coefficient, a periodicity for receiving the second CSI by the access network device is a second periodicity, the first periodicity is greater than the second periodicity, and the first linear combination coefficient is a combination coefficient corresponding to the second basis, wherein
a statistical eigen subspace basis currently used by the processor is the second basis of the statistical eigen subspace, the second CSI is generated by the terminal device based on the second basis of the statistical eigen subspace, the first basis is different from the second basis, and the first basis and the second basis separately indicate a change rule of a downlink channel in at least one of space domain and frequency domain, or the first basis and the second basis separately indicate a change rule of a downlink channel in joint space-frequency domain;
the processor is configured to parse the second CSI;
the access network device is configured to update the second basis to the first basis;
the transceiver is configured to send update indication information to the terminal device, wherein the update indication information indicates the terminal device to update the second basis to the first basis;
the transceiver is configured to: after the access network device updates the second basis to the first basis, receive third CSI sent by the terminal device, wherein the third CSI comprises indication information of a second linear combination coefficient, the third CSI is generated by the terminal device based on the updated second basis, and a periodicity for sending the third CSI by the terminal device is the second periodicity;
the processor is configured to parse the third CSI; and
the processor is configured to determine a precoding matrix based on the first basis and the second linear combination coefficient.

**30.** The access network device according to claim 29, wherein the transceiver is further configured to:

when the first basis is failed to be obtained, send retransmission signaling to the terminal device, wherein the retransmission signaling indicates the terminal device to retransmit the first CSI; and
receive the first CSI retransmitted by the terminal device.

**31.** The access network device according to claim 30, wherein that the first basis is failed to be obtained comprises:

the transceiver fails to receive the first CSI; or
the processor fails to parse the first CSI.

**32.** The access network device according to any one of claims 29 to 31, wherein at least one of the update indication information and the retransmission signaling is sent by using radio resource control RRC signaling, media access control-control element MAC-CE signaling, or downlink control information DCI.

**33.** A computer-readable storage medium, wherein the computer-readable storage medium stores a computer program, and when the computer program is run, the CSI feedback method according to any one of claims 1 to 6, the CSI feedback method according to any one of claims 7 to 12, or the CSI feedback method according to any one of claims 13 to 16 is implemented.

**34.** A chip, comprising a processor and an interface, wherein
the processor is configured to read instructions to perform the CSI feedback method according to any one of claims 1 to 6, the CSI feedback method according to any one of claims 7 to 12, or the CSI feedback method according to any one of claims 13 to 16.

**35.** A computer program product, wherein the computer program product is executed by a computer to perform the CSI feedback method according to any one of claims 1 to 6, the CSI feedback method according to any one of claims 7 to 12, or the CSI feedback method according to any one of claims 13 to 16.

**36.** A communication apparatus, comprising a processor and an interface, wherein
the processor is configured to read instructions to perform the CSI feedback method according to any one of claims 1 to 6, the CSI feedback method according to any one of claims 7 to 12, or the CSI feedback method according to any one of claims 13 to 16.

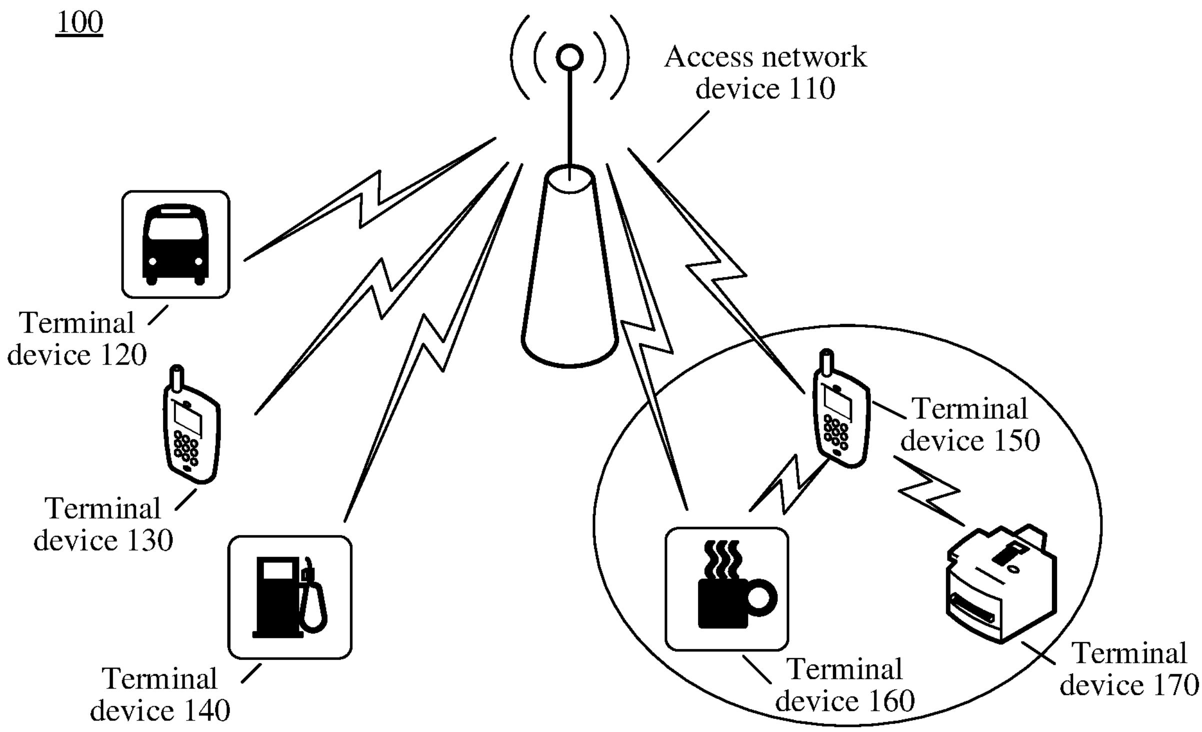
100
Access network device 110
Terminal device 120
Terminal device 130
Terminal device 140
Terminal device 150
Terminal device 160
Terminal device 170

FIG. 1

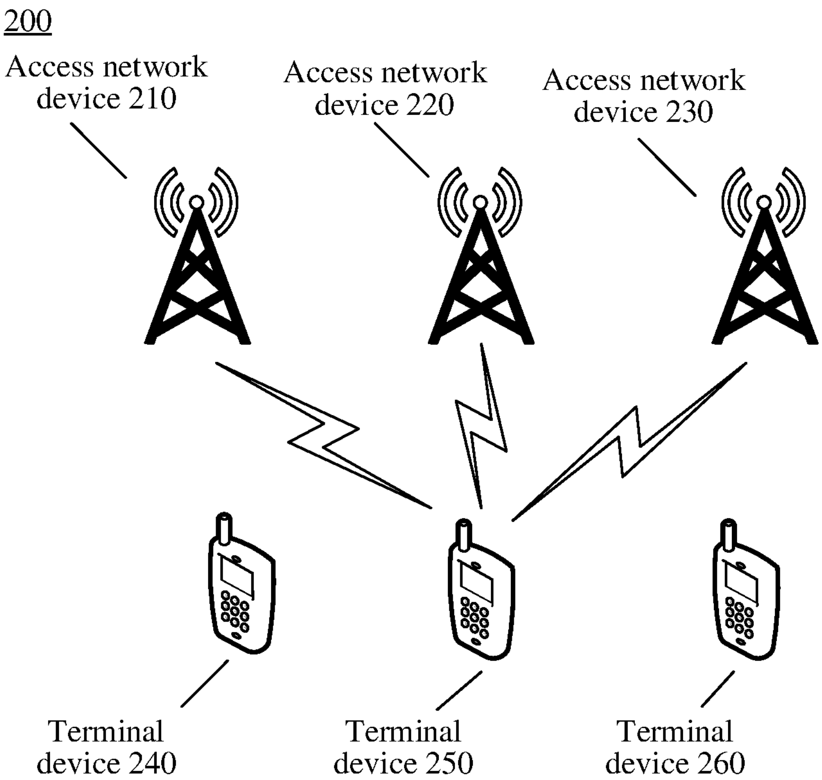
200
Access network device 210
Access network device 220
Access network device 230
Terminal device 240
Terminal device 250
Terminal device 260

FIG. 2

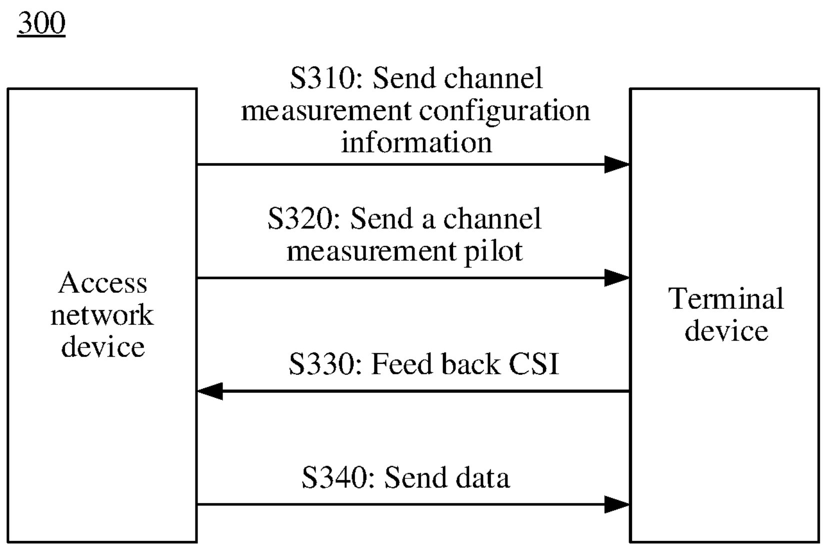
300
S310: Send channel measurement configuration information
S320: Send a channel measurement pilot
Access network device
Terminal device
S330: Feed back CSI
S340: Send data

FIG. 3

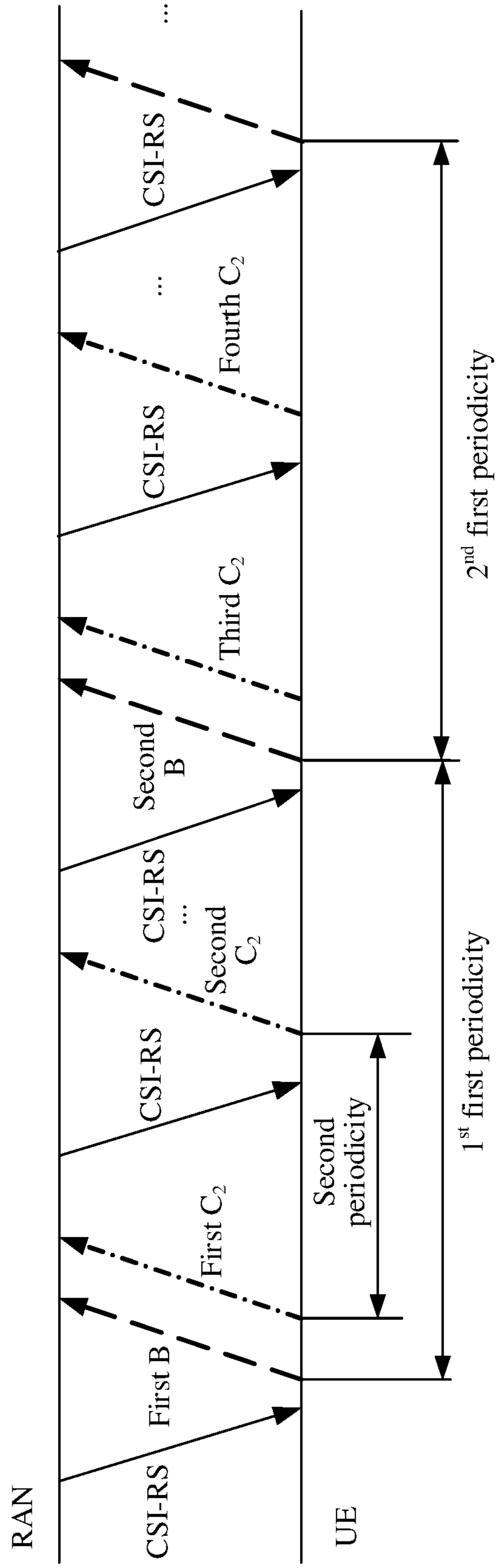
RAN
UE
CSI-RS
First B
First $C_2$
Second periodicity
CSI-RS
Second $C_2$
...
CSI-RS
Second B
1st first periodicity
Third $C_2$
CSI-RS
Fourth $C_2$
...
CSI-RS
...
2nd first periodicity

FIG. 4

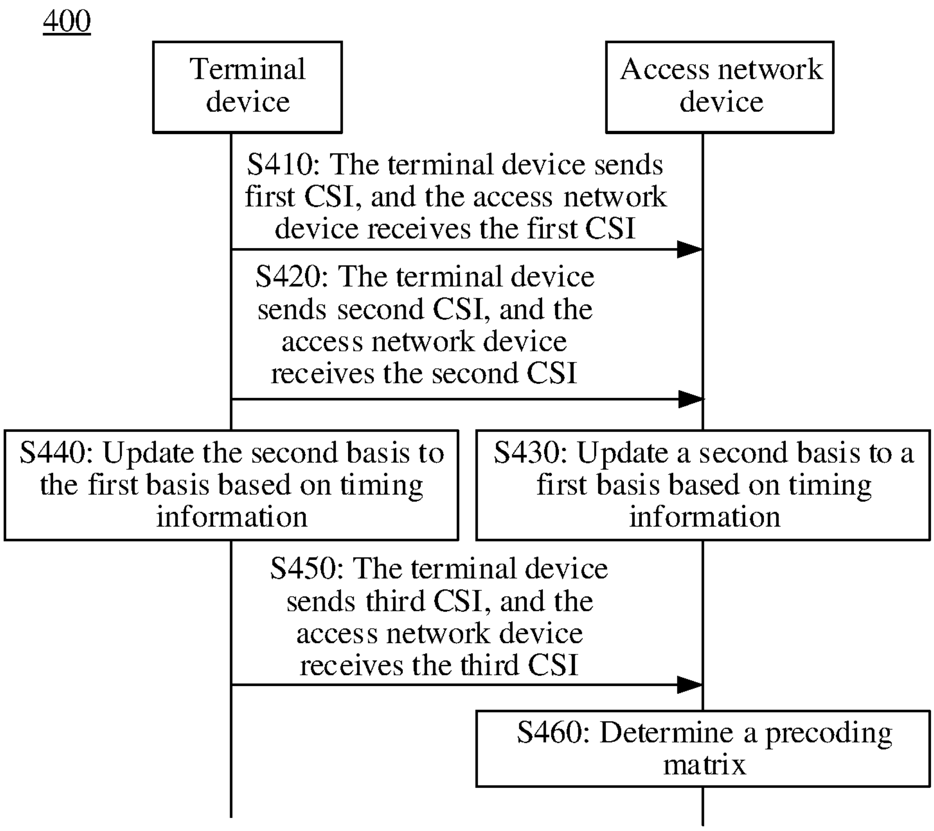
400
Terminal device
Access network device
S410: The terminal device sends first CSI, and the access network device receives the first CSI
S420: The terminal device sends second CSI, and the access network device receives the second CSI
S440: Update the second basis to the first basis based on timing information
S430: Update a second basis to a first basis based on timing information
S450: The terminal device sends third CSI, and the access network device receives the third CSI
S460: Determine a precoding matrix

FIG. 5

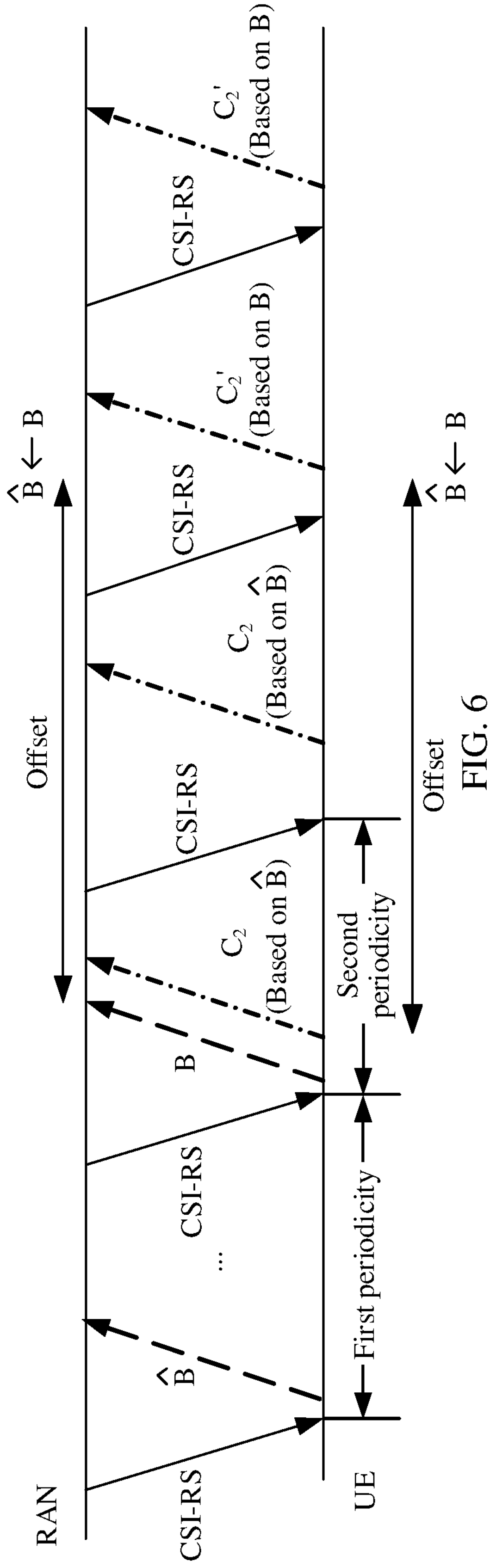
RAN
UE
CSI-RS
$\hat{B}$
...
B
$C_2$ (Based on $\hat{B}$)
$C_2'$ (Based on B)
Offset
$\hat{B} \leftarrow B$
First periodicity
Second periodicity

FIG. 6

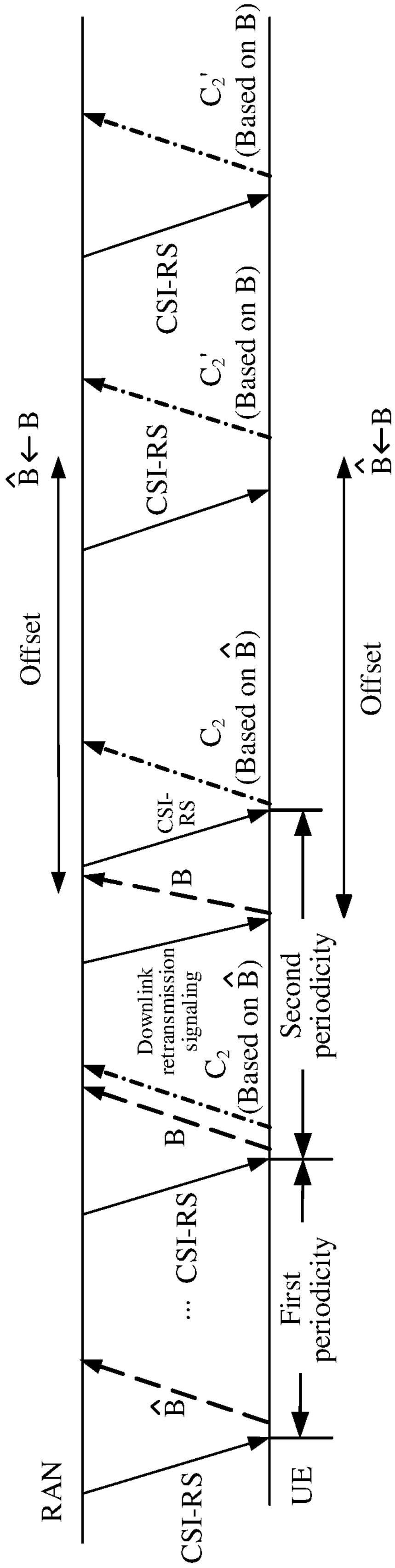
RAN
UE
CSI-RS
B̂
... CSI-RS
First periodicity
B
$C_2$ (Based on B̂)
Downlink retransmission signaling
Second periodicity
B
CSI-RS
$C_2$ (Based on B̂)
Offset
B̂←B
CSI-RS
$C_2'$ (Based on B)
CSI-RS
$C_2'$ (Based on B)
Offset
B̂←B

FIG. 7

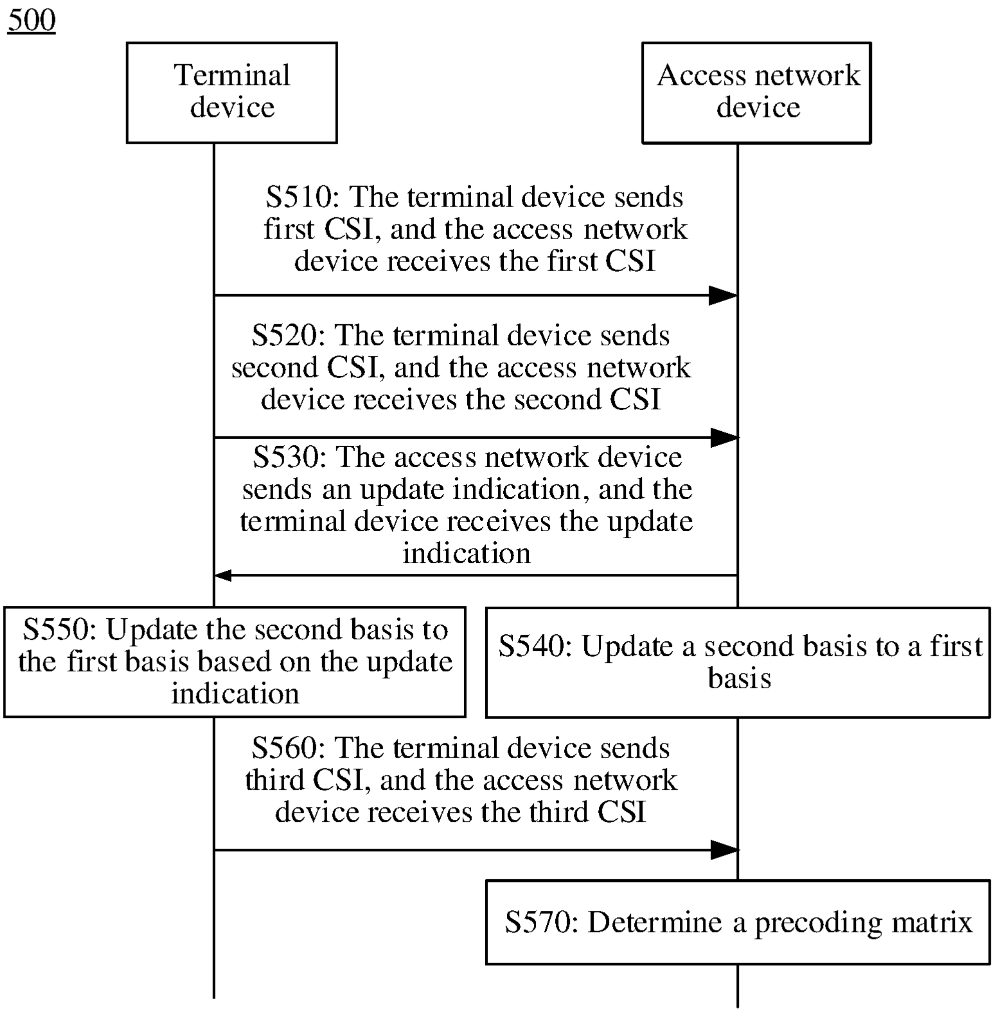
500
Terminal device
Access network device
S510: The terminal device sends first CSI, and the access network device receives the first CSI
S520: The terminal device sends second CSI, and the access network device receives the second CSI
S530: The access network device sends an update indication, and the terminal device receives the update indication
S550: Update the second basis to the first basis based on the update indication
S540: Update a second basis to a first basis
S560: The terminal device sends third CSI, and the access network device receives the third CSI
S570: Determine a precoding matrix

FIG. 8

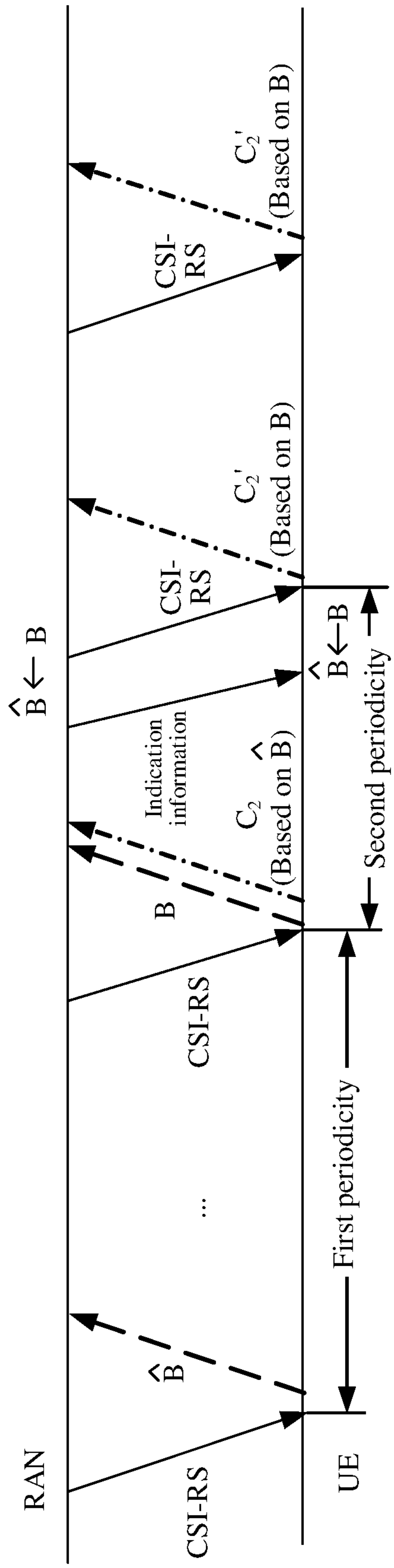
RAN
UE
CSI-RS
$\hat{B}$
First periodicity
...
CSI-RS
B
Indication information
$\hat{C}_2$ (Based on B)
$\hat{B} \leftarrow B$
$\hat{B} \leftarrow B$
Second periodicity
CSI-RS
$C_2'$ (Based on B)
CSI-RS
$C_2'$ (Based on B)

FIG. 9

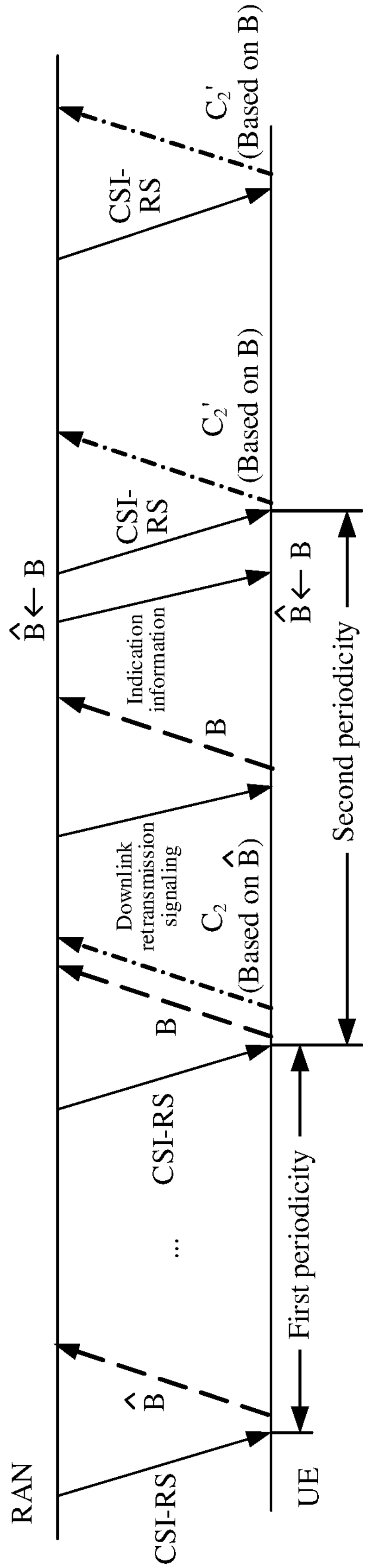
RAN
UE
CSI-RS
B̂
...
CSI-RS
First periodicity
B
C2 (Based on B̂)
Downlink retransmission signaling
B
Indication information
B̂ ← B
B̂ ← B
CSI-RS
C2' (Based on B)
Second periodicity
CSI-RS
C2' (Based on B)

FIG. 10

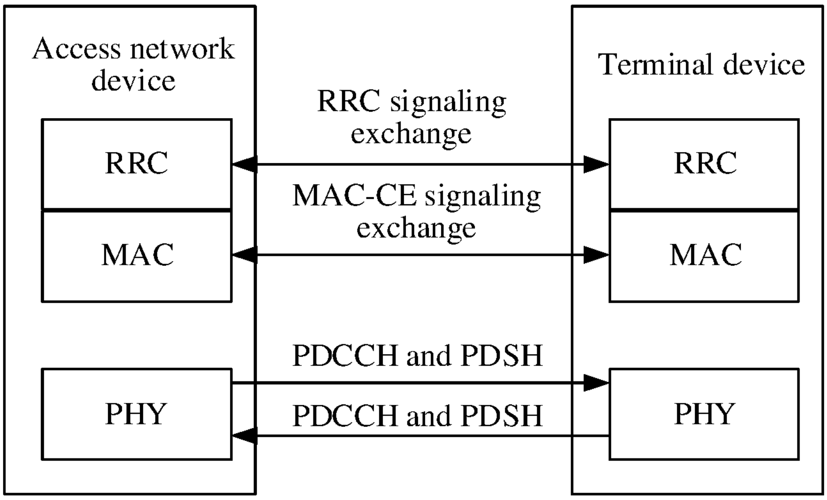
Access network device
Terminal device
RRC signaling exchange
RRC
RRC
MAC-CE signaling exchange
MAC
MAC
PDCCH and PDSH
PHY
PDCCH and PDSH
PHY

FIG. 11

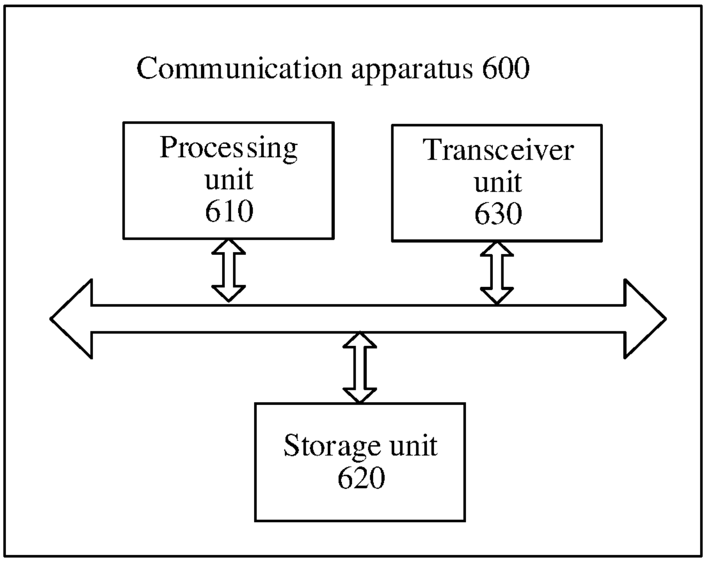
Communication apparatus 600
Processing unit 610
Transceiver unit 630
Storage unit 620

FIG. 12

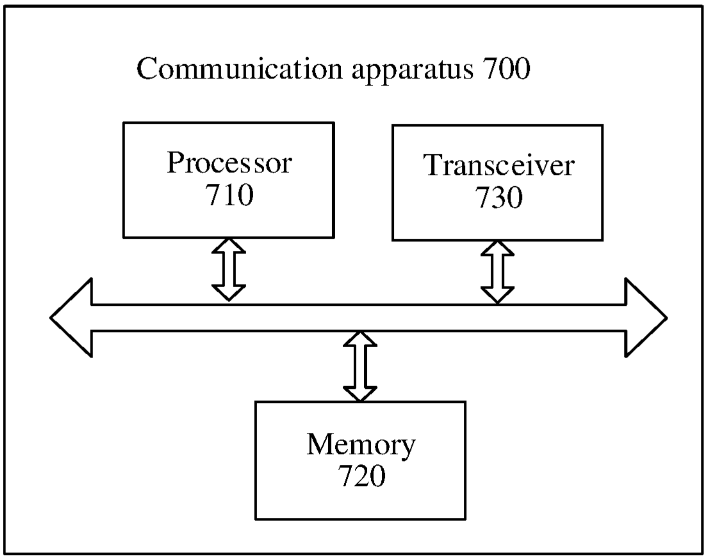
Communication apparatus 700
Processor
710
Transceiver
730
Memory
720

FIG. 13

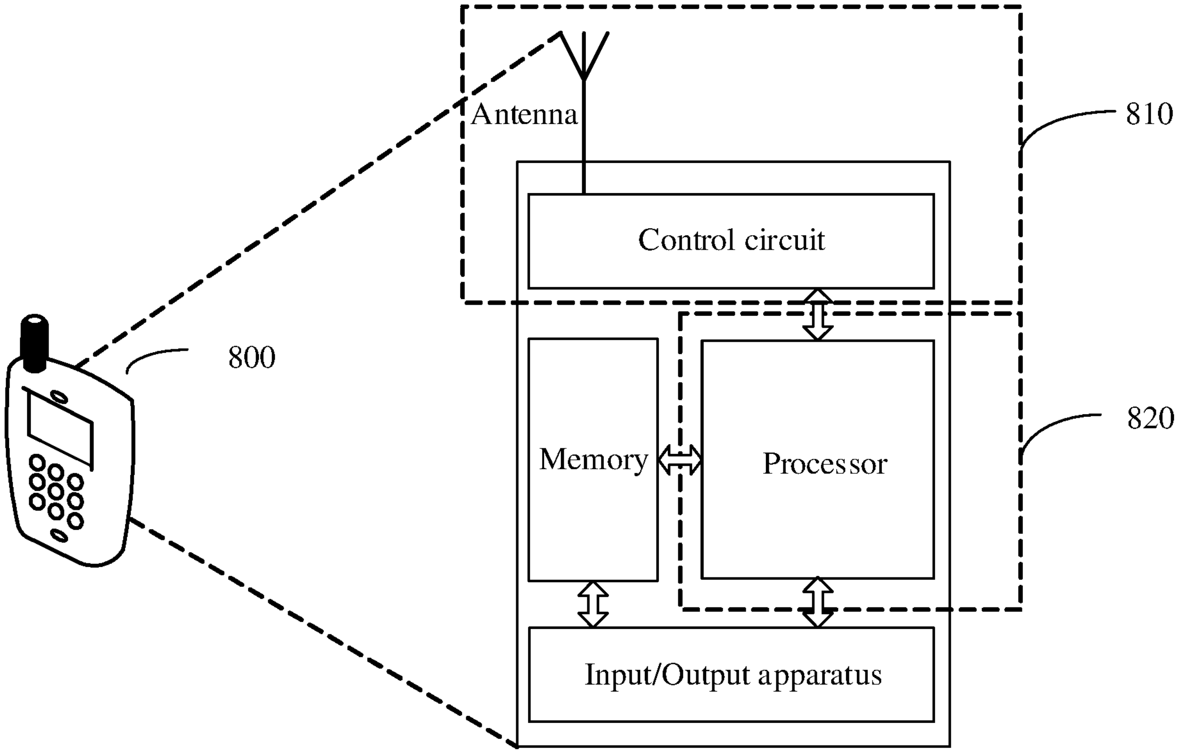
Antenna
810
800
Control circuit
820
Memory
Processor
Input/Output apparatus

FIG. 14

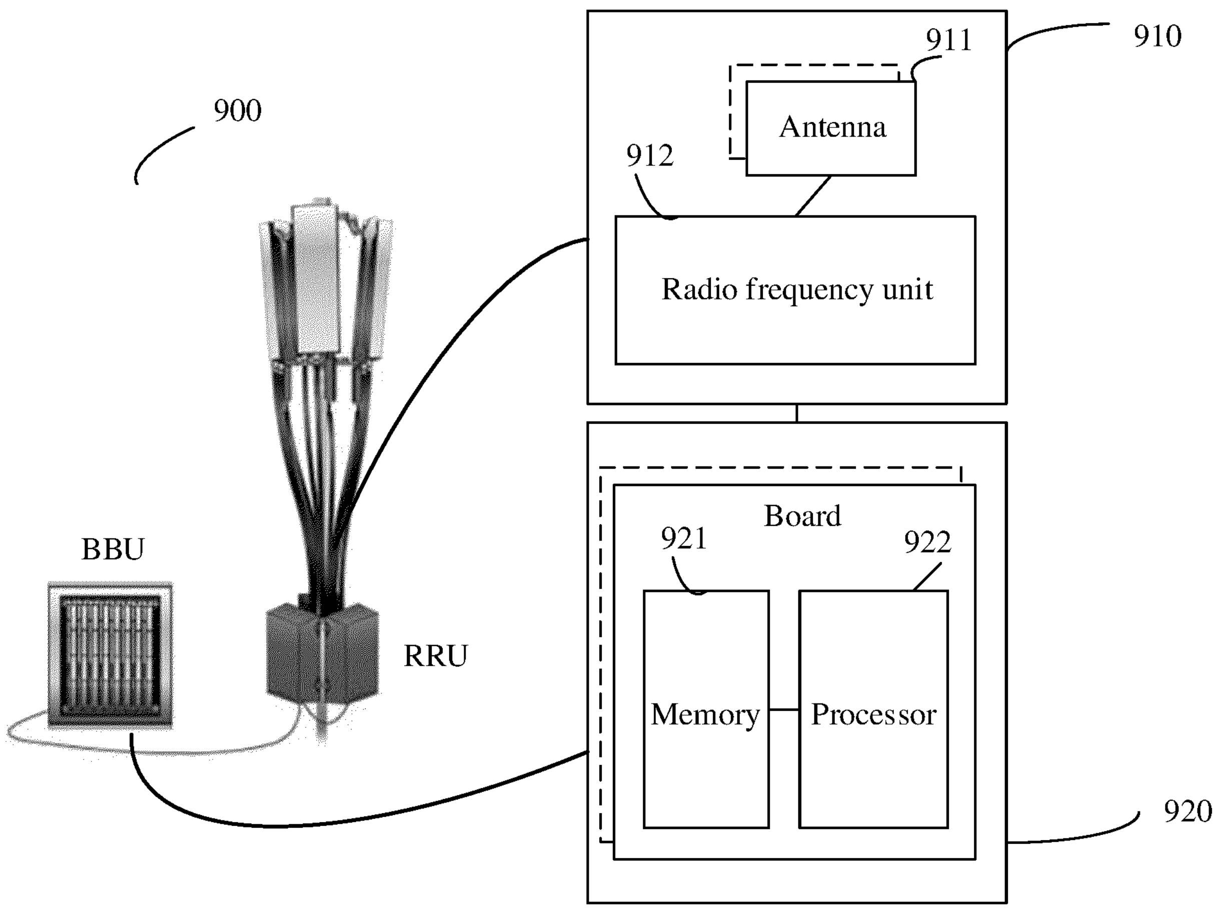
900
BBU
RRU
910
911
Antenna
912
Radio frequency unit
Board
921
922
Memory
Processor
920

FIG. 15

| INTERNATIONAL SEARCH REPORT | International application No. PCT/CN2023/101221 |
|---|---|

**A. CLASSIFICATION OF SUBJECT MATTER**

H04L 1/06(2006.01)i

According to International Patent Classification (IPC) or to both national classification and IPC

**B. FIELDS SEARCHED**

Minimum documentation searched (classification system followed by classification symbols)

IPC：H04L, H04W, H04B

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 基底, 周期, 信道状态, 系数, 统计特征, CSI, substrate, base w information, period, channel w state, coefficient, statistical w feature

**C. DOCUMENTS CONSIDERED TO BE RELEVANT**

| Category* | Citation of document, with indication, where appropriate, of the relevant passages | Relevant to claim No. |
|---|---|---|
| A | CN 106506112 A (HUAWEI TECHNOLOGIES CO., LTD.) 15 March 2017 (2017-03-15) description, paragraphs [0188]-[0194] | 1-36 |
| A | CN 113840324 A (HUAWEI TECHNOLOGIES CO., LTD.) 24 December 2021 (2021-12-24) entire document | 1-36 |
| A | WO 2021238576 A1 (HUAWEI TECHNOLOGIES CO., LTD.) 02 December 2021 (2021-12-02) entire document | 1-36 |
| A | NOKIA et al. "R1-2008909, Enhancement on CSI measurement and reporting" *GPP TSG RAN WG1 Meeting #103-e,* 13 November 2020 (2020-11-13), entire document | 1-36 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 September 2023** | **20 September 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/101221**

| Patent document cited in search report | Publication date (day/month/year) | Patent family member(s) | Publication date (day/month/year) |
|---|---|---|---|
| CN 106506112 A | 15 March 2017 | None | |
| CN 113840324 A | 24 December 2021 | WO 2021259180 A1 | 30 December 2021 |
| WO 2021238576 A1 | 02 December 2021 | CN 113746514 A | 03 December 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210779750